# EUROPEAN PATENT SPECIFICATION

(11) **EP 3 695 804 B1**
(45) Date of publication and mention of the grant of the patent: **20.10.2021**
(21) Application number: 20156903.5
(22) Date of filing: 12.02.2020
(51) Int. Cl.: A61C 13/00, G05B 19/408, G05B 19/414

(54) **STATUS DISPLAY DEVICE, A STATUS DISPLAY METHOD AND STATUS DISPLAY SYSTEM FOR DENTAL PROCESSING MACHINE**
STATUSANZEIGEVORRICHTUNG, STATUSANZEIGEVERFAHREN UND STATUSANZEIGESYSTEM FÜR EINE ZAHNÄRZTLICHE VERARBEITUNGSMASCHINE
DISPOSITIF D'AFFICHAGE D'ÉTAT, PROCÉDÉ D'AFFICHAGE D'ÉTAT ET SYSTÈME D'AFFICHAGE D'ÉTAT POUR MACHINE DE TRAITEMENT DENTAIRE

(30) Priority: 13.02.2019 JP 2019023437; 13.02.2019 JP 2019023438; 19.02.2019 JP 2019027344
(43) Date of publication of application: 19.08.2020
(73) Proprietor: DGSHAPE Corporation, Hamamatsu-shi, Shizuoka 431-2103 (JP)
(72) Inventor: HANAJIMA, Masaki, Hamamatsu-shi, Shizuoka 431-2103 (JP); YOSHIOKA, Shiro, Hamamatsu-shi, Shizuoka 431-2103 (JP); OTAKA, Akira, Hamamatsu-shi, Shizuoka 431-2103 (JP); MINENO, Yosuke, Hamamatsu-shi, Shizuoka 431-2103 (JP); MADHU, Mani, Hamamatsu-shi, Shizuoka 431-2103 (JP)
(74) Representative: Grünecker Patent- und Rechtsanwälte PartG mbB

(56) References cited:
- EP-A2- 3 511 789
- US-A- 5 984 503
- US-A1- 2005 002 151
- US-A1- 2016 179 085

## Description

The present invention relates to a status display method and status display systems for dental processing machines. More specifically, the present invention relates to a method that displays processing statuses of a plurality of dental processing machines and a status display system including a status display device and an operation terminal used for operating the dental processing machines.

For example, Japanese Laid-open Patent Publication No. 2015-120222 discloses a cutting machine that produces an object by performing cutting processing (which will be hereinafter referred to as processing) in which a workpiece made of a predetermined material, such as ceramic, resin, or the like, by molding is cut into a desired shape. The cutting machine disclosed in Japanese Laid-open Patent Publication No. 2015-120222 processes the workpiece by changing respective positions of the processing tool and the workpiece relative to each other while rotating, using a bar-shaped processing tool, the processing tool in a rotation direction. As a result, a desired object can be produced.
EP 3 511 789 A2 describes a display device that is connected to a plurality of different models of dental cutting machines. The display device is split into two areas. A common area displays common items of the dental cutting machines, like the machine appearance image. In addition, a specific area displays items that are different between the cutting machines, like work piece information.

A dental processing machine used in the dental field is an example of the above described cutting machine. Some users have introduced a plurality of dental processing machines in some cases. The plurality of dental processing machines is not necessarily placed in the same room and, in some cases, some of the dental processing machines are placed in remote locations. In such a case, it is difficult to manage all of statuses of the plurality of dental processing machines. In particular, in order to check a status of a dental processing machine placed in a remote location, a user has needed to actually visit the remote location. Therefore, it has been difficult to know the statuses of the plurality of dental processing machines in a simple manner.

In view of the foregoing, a preferred embodiment of the present invention provide a status display method and a status display system for a dental processing machine, the status display method and the status display system being able to grasp a status of a dental processing machine placed in a remote location, being able to know statuses of a plurality of dental processing machines in a simple manner. This is achieved by the features of claim 1 for a status display system and by the features of claim 11 for a status display method.

### BRIEF DESCRIPTION OF THE DRAWINGS

[FIG. 1] FIG. 1 is a conceptual view of a status display system according to a preferred embodiment.
[FIG. 2] FIG. 2 is a perspective view of a dental processing machine.
[FIG. 3] FIG. 3 is a front view of the dental processing machine, illustrating a state in which a cover is opened.
[FIG. 4] FIG. 4 is a perspective view of a tool magazine, a rotation supporting member, and a clamp.
[FIG. 5] FIG. 5 is a block diagram of the status display system.
[FIG. 6] FIG. 6 is a view illustrating an example of a display device.
[FIG. 7] FIG. 7 is a diagram illustrating a flow of data when a status screen is displayed on a display device.
[FIG. 8] FIG. 8 is a conceptual view of a maintenance history display system according to a first modified example.
[FIG. 9] FIG. 9 is a block diagram of the maintenance history display system.
[FIG. 10] FIG. 10 is a view illustrating an example of a terminal display device.
[FIG. 11] FIG. 11 is a view illustrating a cleaning tool.
[FIG. 12] FIG. 12 is a table illustrating a maintenance history table.
[FIG. 13] FIG. 13 is a view illustrating an example of a display device.
[FIG. 14] FIG. 14 is a flowchart illustrating steps for notifying an alert.
[FIG. 15] FIG. 15 is a conceptual view of an error history display system according to a second modified example.
[FIG. 16] FIG. 16 is a block diagram of the error history display system.
[FIG. 17] FIG. 17 is a table illustrating an example of an error history table.
[FIG. 18] FIG. 18 is a view illustrating an example of a display device.

### DETAILED DESCRIPTION OF THE PREFERRED EMBODIMENTS

With reference to the attached drawings, a status display system including a status display device for a dental processing machine and a method therefore according to a preferred embodiment of the present invention will be described below. Note that, as a matter of course, a preferred embodiment described herein is not intended to be particularly limiting the present invention.

### <Embodiment>

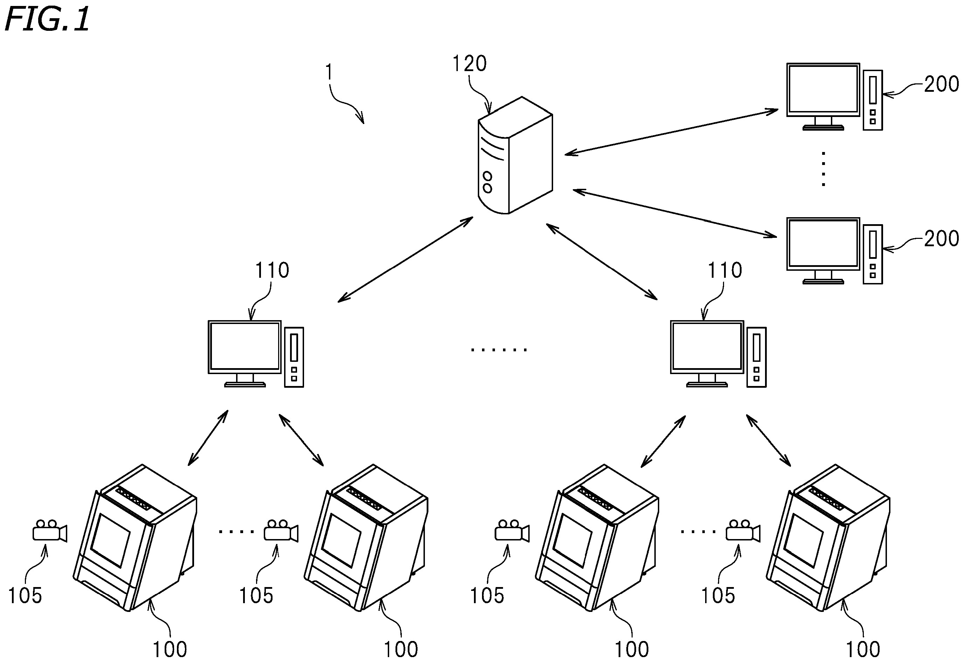

FIG. 1 is a conceptual view of a status display system 1 according to a preferred embodiment of the present invention. The status display system 1 collectively manages and displays statuses of a plurality of dental processing machines 100. Herein, a status of a dental processing machine 100 means whether the dental processing machine 100 is being processed, or the like. First, an outline of the status display system 1 will be described.

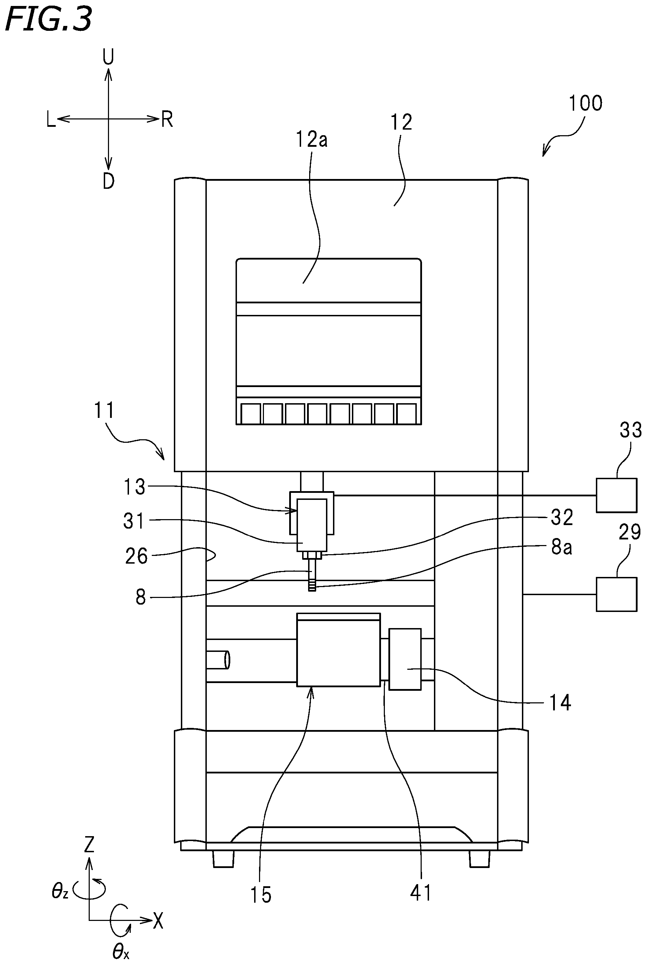

As illustrated in FIG. 1, the status display system 1 includes a dental processing machine 100, an imaging device 105, an operation terminal 110, a server 120, and a status display device 200. There is no particular limitation on the number of the dental processing machines 100 according to this embodiment. The number of the dental processing machines 100 may be one or more. The imaging device 105 captures an image of a processing space 26 (see FIG. 3) in which a workpiece 5 is processed in the dental processing machine 100. The imaging device 105 makes a pair with the dental processing machine 100 and the number of the imaging devices 105 is the same as the number of the dental processing machines 100. However, a plurality of the imaging devices 105 may be provided for one dental processing machine 100. In this case, the number of the imaging devices 105 is larger than the number of the dental processing machines 100.

The operation terminal 110 is used by a user to operate the dental processing machine 100. One or more dental processing machines 100 are communicably connected to the operation terminal 110. One or more imaging devices 105 are also communicably connected to the operation terminal 110. Note that there is no particular limitation on the number of the operation terminals 110 according to this embodiment. The number of the operation terminals 110 may be one or more. The server 120 collectively manages information for the plurality of dental processing machines 100. One or more dental processing machines 100 are connected to the server 120. In this embodiment, the plurality of operation terminals 110 is communicably connected to the server 120 and the plurality of dental processing machines 100 is connected to the server 120 via the operation terminals 110.

The status display device 200 manages and displays a status of each of the dental processing machines 100. Herein, the status display device 200 is communicably connected to the server 120. Note that there is no particular limitation on the number of the status display devices 200. The number of the status display devices 200 may be one or more. Note that, in this embodiment, the status display system 1 may be realized by a client-server type system and may be realized by cloud computing. The dental processing machine 100, the imaging device 105, the operation terminal 110, the server 120, and the status display device 200 will be described in detail below.

First, the dental processing machines 100 will be described. The plurality of dental processing machines 100 is different types in some cases. However, basic configurations of the plurality of dental processing machines 100 are the same. Therefore, a basic configuration of one of the dental processing machines 100 will be described herein.

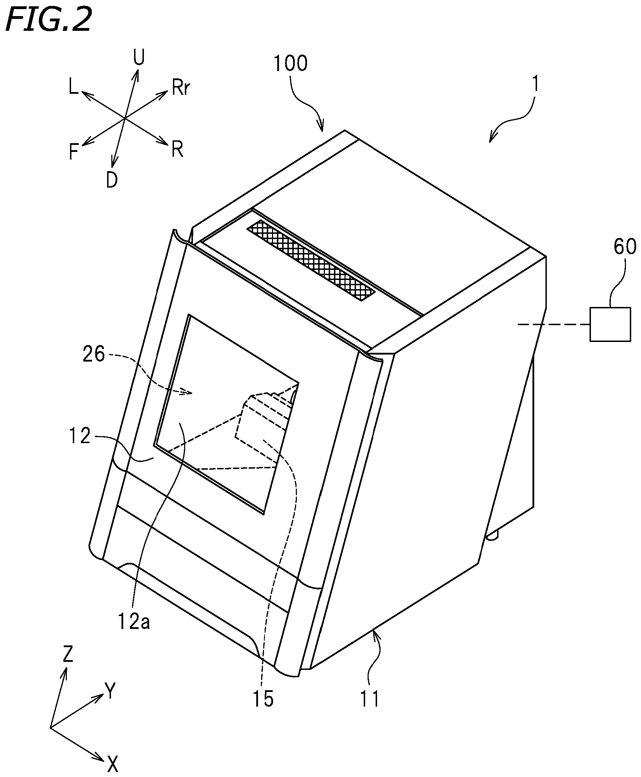

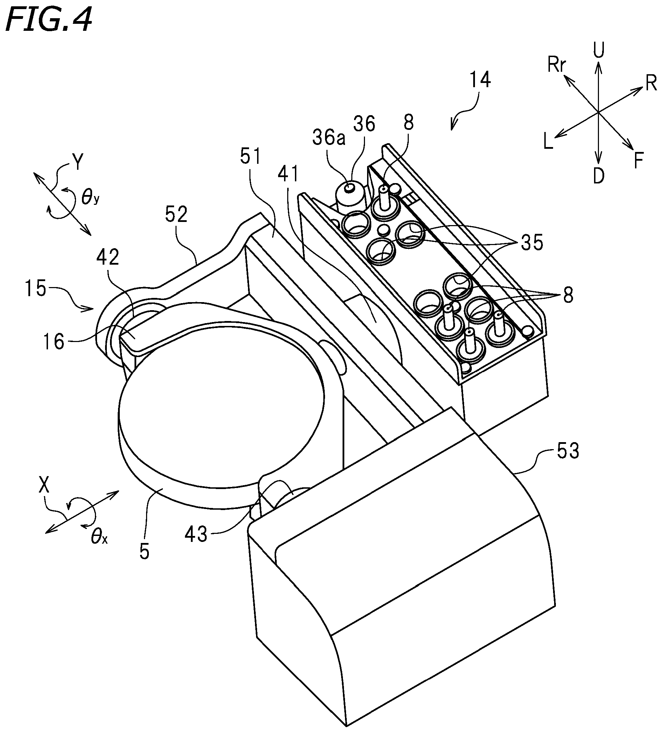

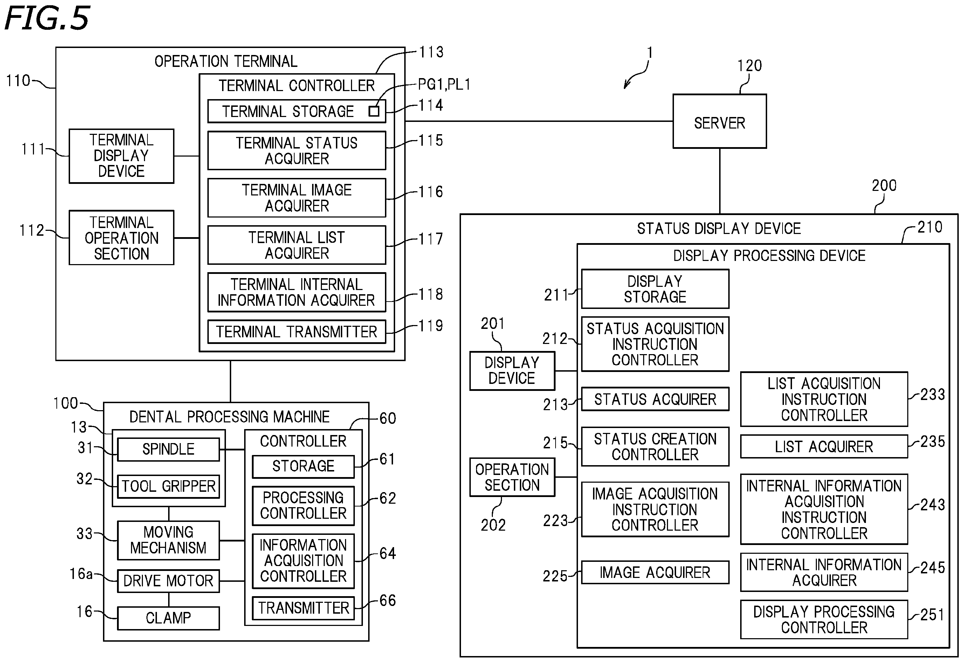

FIG. 2 is a perspective view of the dental processing machine 100. FIG. 3 is a front view of the dental processing machine 100, illustrating a state in which a cover 12 is opened. FIG. 4 is a perspective view of a tool magazine 14, a rotation supporting member 15, and a clamp 16 which will be described later. FIG. 5 is a block diagram of the status display system 1. In the following description, left and right mean left and right when viewed from a user who is in front of the dental processing machine 100, respectively. A bottom surface that forms a processing space 26 (see FIG. 3) inside a main body 11 of the dental processing machine 100 is downwardly inclined in a direction from a near side to a further side when viewed from the user. Therefore, in this embodiment, a direction in which the user moves away from the dental processing machine 100 along the bottom surface is a front direction and a direction in which the user approaches the dental processing machine 100 along the bottom surface is a rear direction. Up and down in a direction perpendicular to the bottom surface mean up and down. Note that reference symbols F, Rr, L, R, U, and D in the drawings indicate front, rear, left, right, up, and down, respectively.

In this embodiment, where axes that are perpendicular to each other are an X axis, a Y axis, and a Z axis, the dental processing machine 100 is arranged in a plane surface formed by the X axis and the Y axis. The X axis extends in a left-right direction, the Y axis extends in a front-rear direction, and the Z axis extends in an up-down direction. The reference symbols θx, θy, and θz in the drawings indicate rotational directions around the X axis, the Y axis, and the Z axis, respectively. However, these directions are used herein merely for convenience of description, do not limit setting modes of the dental processing machine 100, and do not limit the present invention.

The dental processing machine 100 produces an object by processing a workpiece 5 (see FIG. 4). Herein, there is no particular limitation on a type of the object. However, the object is, for example, a crown prosthesis. Examples of the crown prosthesis include, for example, an inlay, a crown, a bridge, or the like. In this embodiment, the dental processing machine 100 is used in the dental field and produces a crown prosthesis from the workpiece 5.

The workpiece 5 has, for example, a disk shape. The workpiece 5 is made of various materials, such as zirconia, a wax, a polymethyl methacrylate resin (PMMA), a hybrid resin, a polyether ether ketone resin (PEEK), plaster, or the like. When zirconia is used as a type of a material of the workpiece 5, for example, semi-sintered zirconia is used. However, there is no particular limitation on the shape and material of the workpiece 5.

As illustrated in FIG. 2, the dental processing machine 100 includes the main body 11, the cover 12, a processing mechanism 13 (see FIG. 3), the tool magazine 14 (see FIG. 4), the rotation supporting member 15, and the clamp 16 (see FIG. 4). The main body 11 is formed into a box shape and has a space inside. The space is the processing space 26. The processing space 26 is a space in which the workpiece 5 is cut. Although not illustrated in detail, the bottom surface that forms the processing space 26 is downwardly inclined in a direction from the front to the rear. A front portion of the main body 11 is opened. As illustrated in FIG. 3, the cover 12 is supported by the main body 11 such that the opening of the main body 11 is openable and closable. A window 12a is provided in the cover 12. The user can view the processing space 26 of the main body 11 through the window 12a.

As illustrated in FIG. 3, the processing mechanism 13 cuts the workpiece 5 using a processing tool 8. The processing mechanism 13 is brought into contact with the workpiece 5 while the processing tool 8 is rotated, thereby processing the workpiece 5. The processing mechanism 13 includes a spindle 31 and a tool gripper 32. The spindle 31 and the tool gripper 32 are arranged in the processing space 26 of the main body 11. The spindle 31 rotates the tool gripper 32 and the processing tool 8 gripped by the tool gripper 32 with a longitudinal direction as an axis. The spindle 31 is provided so as to be replaceable with respect to the main body 11. The spindle 31 extends in the up-down direction and is configured to be rotatable around the Z axis (θz). The tool gripper 32 grips the processing tool 8 and is provided in the spindle 31. Specifically, the tool gripper 32 is provided on a bottom surface of the spindle 31. The tool gripper 32 selectively grips one of a plurality of the processing tools 8. The spindle 31 rotates around the Z axis (θz), and thus, the tool gripper 32 and the processing tool 8 gripped by the tool gripper 32 rotate around the Z axis (θz), in other words, around a central axis of the processing tool 8.

In this embodiment, the dental processing machine 100 includes a moving mechanism 33. The moving mechanism 33 moves the processing mechanism 13 (specifically, the spindle 31 and the tool gripper 32). Herein, the moving mechanism 33 is configured to move the processing mechanism 13 in the left-right direction and the up-down direction. Note that there is no particular limitation on a configuration of the moving mechanism 33. For example, the moving mechanism 33 is formed by a motor and the processing mechanism 13 is moved by driving of the motor.

In this embodiment, provided are a plurality of processing tools 8, which are gripped by the tool gripper 32. Each of the processing tools 8 has a bar shape and includes an edge tool 8a in a lower portion. The plurality of types of processing tools 8 each including the edge tool 8a with a different shape is prepared in advance. During processing, the processing tool 8 gripped by the tool gripper 32 is replaced with another processing tool 8 as necessary in accordance with a processing program PG1 (see FIG. 5) which will be described later.

As illustrated in FIG. 4, the tool magazine 14 can store the plurality of processing tools 8. In this embodiment, the tool magazine 14 is formed into a box shape. A plurality of storage holes 35 in which the processing tools 8 is stored are formed in an upper surface of the tool magazine 14. The processing tools 8 are inserted through the storage holes 35 with upper portions of the processing tools 8 exposed through the storage holes 35. Note that there is no particular limitation on the number of the storage holes 35. In this embodiment, the number of the storage holes 35 is ten. Therefore, in this embodiment, ten processing tools 8 can be stored in the tool magazine 14. In replacing the processing tool 8 gripped by the tool gripper 32, the processing tool 8 gripped by the tool gripper 32 is returned to the corresponding one of the storage holes 35. Then, the processing mechanism 13 is moved to a position over the processing tool 8 that is to be used next. Thereafter, an upper edge of the processing tool 8 located under the tool gripper 32 is gripped by the tool gripper 32.

In this embodiment, the dental processing machine 100 includes a tool sensor 36. The tool sensor 36 is provided in the tool magazine 14. The tool sensor 36 detects contact with a bar-shaped processing tool 8 gripped by a tool gripper 32. There is no particular limitation on a configuration of the tool sensor 36. In this embodiment, the tool sensor 36 includes a switch 36a. The switch 36a is configured to be minutely displaced by a small load applied thereto from above, and the tool sensor 36 detects contact of the processing tool 8, based on displacement of the switch 36a.

In this embodiment, a first rotation axis 41 that rotationally supports the rotation supporting member 15 is provided in the tool magazine 14. The first rotation axis 41 extends in the left-right direction and is connected to the rotation supporting member 15. Although not illustrated, a second driving mechanism that rotates the first rotation axis 41 is provided in the tool magazine 14. The first rotation axis 41 is configured to be rotatable around the X axis (θx) by the second driving mechanism. The first rotation axis 41 rotates around the X axis (θx), and thus, the rotation supporting member 15 rotates around the X axis (θx).

The rotation supporting member 15 rotatably supports the clamp 16. The rotation supporting member 15 is formed into a substantially C shape. The rotation supporting member 15 is connected to the tool magazine 14 via the first rotation axis 41. The rotation supporting member 15 includes a first portion 51, a second portion 52, and a third portion 53. The first portion 51 is disposed on a left side of the tool magazine 14 and extends in the front-rear direction. The second portion 52 extends leftward from a rear end of the first portion 51. The third portion 53 extends leftward from a front end of the first portion 51. The third portion 53 is opposed to the second portion 52. In this embodiment, the clamp 16 is disposed between the second portion 52 and the third portion 53.

The clamp 16 supports the workpiece 5 in processing the workpiece 5. In this embodiment, an adapter (not illustrated) is attached to the workpiece 5, and the clamp 16 supports the workpiece 5 via the adapter. For example, the clamp 16 has a shape corresponding to a portion of a shape of the workpiece 5. Herein, the clamp 16 has a substantially C shape. In this embodiment, processing is performed on the workpiece 5 supported by the clamp 16. The clamp 16 is rotatably supported by the second portion 52 and the third portion 53 of the rotation supporting member 15. One end of a second rotation axis 42 is connected to a rear portion of the clamp 16, and the second portion 52 is connected to the other end of the second rotation axis 42. One end of a third rotation axis 43 is connected to a front portion of the clamp 16, and the third portion 53 is connected to the other end of the third rotation axis 43. In this embodiment, a drive motor 16a (see FIG. 5) that rotates the clamp 16 around the Y axis (θy) is provided in the third portion 53.

In this embodiment, as illustrated in FIG. 3, the dental processing machine 100 includes a dust collector 29. The dust collector 29 collects processing powder generated during cutting processing performed on the workpiece 5 in the processing space 26 inside a main body 11. The dust collector 29 is provided in the main body 11. Note that there is no particular limitation on a configuration of the dust collector 29. For example, the dust collector 29 includes a fan. When the fan operates, the processing powder in the processing space 26 can be collected.

The dental processing machine 100 according to this embodiment may be a dental processing machine with a so-called a disk changer. Note that, as the disk changer in this case, a known disk changer can be employed. As the disk changer, for example, a workpiece conveying device described in Japanese Laid-open Patent Publication No. 2018-89763 can be employed.

As illustrated in FIG. 2, the dental processing machine 100 includes a controller 60. The controller 60 controls processing of the workpiece 5. The controller 60 is formed of a microcomputer and is provided inside the man body 11. The controller 60 includes, for example, a central processing unit (CPU), a ROM that stores a program or the like which is executed by the CPU, a RAM, or the like. Herein, control of processing of the workpiece 5 is performed using the program stored in the microcomputer.

As illustrated in FIG. 5, the controller 60 is communicably connected to the spindle 31 and controls rotation of the spindle 31. The controller 60 is communicably connected to the drive motor 16a that rotates the clamp 16 around the Y axis (θy) and controls the drive motor 16a. The controller 60 is communicably connected to the moving mechanism 33 that moves the processing mechanism 13 in the left-right direction and the up-down direction and controls the moving mechanism 33. Although not illustrated, the controller 60 is communicably connected to the second driving mechanism that rotates the first rotation axis 41 and controls the second driving mechanism.

In this embodiment, the controller 60 includes a storage 61, a processing controller 62, an information acquisition controller 64, and a transmitter 66. Each element of the controller 60 may be configured by a software and may be configured by a hardware. Each element of the controller 60 may be realized by one or more processors and may be incorporated in a circuit.

The dental processing machine 100 according to this embodiment automatically processes the workpiece 5 using the one or more processing tools 8, based on the processing program PG1, and thus, produces desired one or more objects. The dental processing machine 100 processes the workpiece 5, based on the processing program PG1. The processing program PG1 is so-called NC data (NC program) or job data (job program). The processing program PG1 indicates in what kind of procedure the dental processing machine 100 processes the workpiece 5. In the processing program PG1, a plurality of commands in which an operation of the processing mechanism 13 and an operation of the clamp 16 that supports the workpiece 5 are defined by coordinate values is recorded.

The processing program PG1 is created, for example, by a CAM device (not illustrated). CAM is an abbreviation of computer aided manufacturing, and the CAM device is a device called computer aided manufacturing device. The CAM device creates the processing program PG1, based on data (which will be hereinafter also referred to as object data) for a shape or shapes of one or more objects that are produced by processing the workpiece 5. Note that the object data is STL data which is data created, for example, by a computer aided design device (which will be hereinafter also referred to as a CAD device). The processing program PG1 created by the CAM device is transmitted to the dental processing machine 100, for example, at a start of processing. The dental processing machine 100 then sequentially executes a command of the received processing program PG1 to produce one or more objects from the workpiece 5.

Note that the number of the processing programs PG1 that are transmitted to the dental processing machine 100 at a start of processing may be one or more. When a plurality of the processing programs PG1 is transmitted to the dental processing machine 100, a list (which will be hereinafter also referred to as a processing program list) PL1 of the plurality of processing programs PG1 is stored in the storage 61. The dental processing machine 100 executes the processing programs PG1 in an order in the processing program list PL1 to produce one or more objects from the workpiece 5.

In this embodiment, the processing controller 62 is configured to process the workpiece 5 by executing the processing program PG1. The processing controller 62 controls the processing mechanism 13 and the clamp 16 to process the workpiece 5, based on the processing program PG1. In this embodiment, the processing controller 62 controls operations of the processing mechanism 13 and the clamp 16, based on coordinate values indicated in a command of the processing program PG1. The processing controller 62 integrally controls an operation of the clamp 16 with an operation of the processing mechanism 13 as a whole. Thus, a relative positional relationship between the workpiece 5 supported by the clamp 16 and the processing tool 8 is changed in a three-dimensional manner, and thus, highly accurate processing by five-axis control of the X-axis direction, the Y-axis direction, the Z-axis direction, the rotation direction around the X axis (θx), and the rotation direction around the Y axis direction (θy) can be realized. In this embodiment, processing on the workpiece 5 can be performed by causing the edge tool 8a (see FIG. 3) of the processing tool 8 rotated by the spindle 31 of the processing mechanism 13 to abut on the workpiece 5 supported by the clamp 16. Herein, the processing tool 8 is caused to abut on the workpiece 5 in an arbitrary position at an arbitrary angle, thereby producing an object.

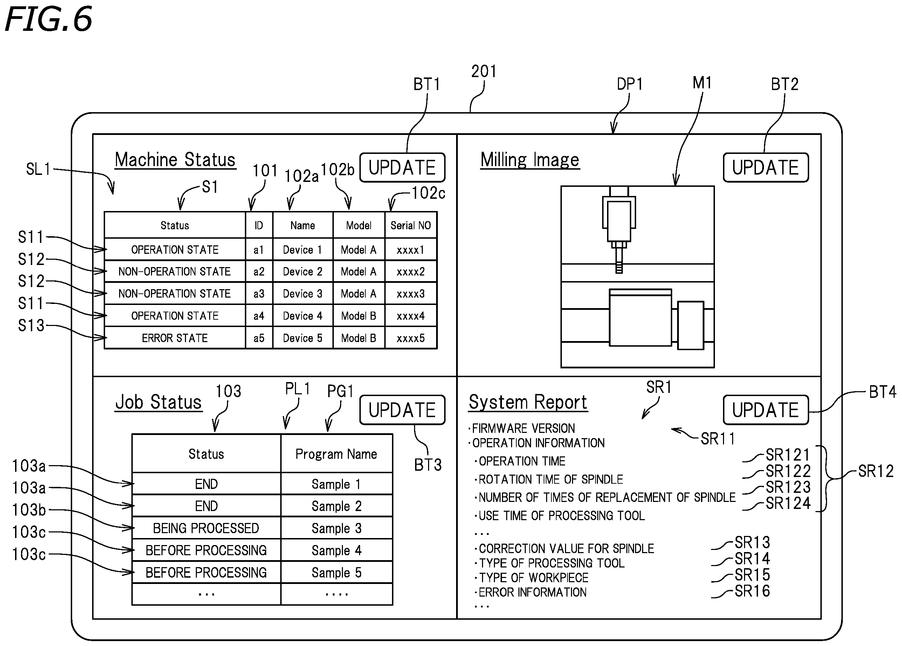

In this embodiment, the information acquisition controller 64 acquires information of the dental processing machine 100. As illustrated in FIG. 6, the information of the dental processing machine 100 is, for example, information for a processing status S1, internal information SR1, or the like of the dental processing machine 100. Herein, the processing status S1 indicates in what kind status the dental processing machine 100 is. The processing status S1 includes, for example, an operation state S11, a non-operation state S12, and an error state S13. The operation state S11 is a state in which the dental processing machine 100 is processing the workpiece 5. The non-operation state S12 is a state in which the dental processing machine 100 is not processing the workpiece 5. The error state S13 is a state in which an error has occurred in the dental processing machine 100. Note that the processing status S1 may include some other state. The processing status S1 may include, for example, a completion state indicating that execution of all of the processing programs PG1 in the processing program list PL1 is completed. The information acquisition controller 64 acquires the processing status S1 described above.

The internal information SR1 includes, for example, at least one of a firmware version SR11, operation information SR12, a correction value SR13 for origin adjustment for the spindle 31, a type SR14 of the processing tool 8, a type SR15 of the workpiece 5, and error information SR16. However, the internal information SR1 may include some other information of the dental processing machine 100. The firmware version SR11 is a version of a firmware incorporated in the controller 60 of the dental processing machine 100. For example, when the firmware of the dental processing machine 100 is updated to a new firmware because of a defect of the firmware or the like, the firmware version SR11 is also updated. The firmware version SR11 is stored in the storage 61. The information acquisition controller 64 acquires the firmware version SR11 from the dental processing machine 100.

The operation information SR12 is information while the dental processing machine 100 is operating (that is, information while the dental processing machine 100 processes the workpiece 5), and includes, for example, an operation time SR121 of the dental processing machine 100, a rotation time SR122 of the spindle 31, the number of times SR123 of replacement of the spindle 31, and a use time SR124 of the processing tool 8. The operation time SR121 of the dental processing machine 100 is a total time during which the dental processing machine 100 that is a subject performs processing. In other words, the operation time SR121 of the dental processing machine 100 is a total time during which the one or more processing programs PG1 were being executed.

The rotation time SR122 of the spindle 31 is a total time during which the spindle 31 actually rotates while the dental processing machine 100 is processing the workpiece 5. The rotation time SR122 of the spindle 31 is obtained by measuring a rotation time of the spindle 31 each time the spindle 31 rotates during processing. The spindle 31 is replaceably provided in the main body 11. The number of times SR123 of replacement of the spindle 31 is the number of times the spindle 31 has been replaced in the dental processing machine 100 that is a subject. The use time SR124 of the processing tool 8 is a time during which the processing tool 8 is used for processing. The use time SR124 of the processing tool 8 is, for example, a total time during which the processing tool 8 is gripped by the tool gripper 32. In this embodiment, a plurality of the processing tools 8 is selectively used, and therefore, the use time SR124 of the processing tool 8 is measured for each group of the plurality of processing tools 8. Note that the operation information SR12 is stored in the storage 61. The information acquisition controller 64 acquires the operation information SR12 from the dental processing machine 100.

The spindle 31 moves in the processing space 26 and, when the spindle 31 is used for a long time, position displacement of the spindle 31 occurs in some cases. For the spindle 31, a position of the origin determined in advance is set and position displacement of the spindle 31 occurs less often by adjusting the position of the origin. Mechanical adjustment of the position of the origin of the spindle 31 is origin adjustment for the spindle 31, and a value used for correcting displacement of the position of the origin in adjustment of the position of the origin is called correction value SR13. For example, the correction value SR13 is stored in the storage 61. The information acquisition controller 64 acquires the correction value SR13 for origin adjustment for the spindle 31 from the dental processing machine 100.

The type SR14 of the processing tool 8 is information for a type of the processing tool 8 gripped by the tool gripper 32 of the dental processing machine 100 that is a subject, and also, is information for the type of the processing tool 8 stored in the tool magazine 14. The type SR14 of the processing tool 8 is a material of the processing tool 8, a shape of the edge tool 8a of the processing tool 8, or the like. However, the type SR14 of the processing tool 8 may include some other information for the processing tool 8.

The type SR15 of the workpiece 5 is a type of the workpiece 5 that was being processed by the dental processing machine 100. In other words, the type SR15 of the workpiece 5 is a type of the workpiece 5 supported by the clamp 16 (see FIG. 4) of the dental processing machine 100, and also, is a type of the workpiece 5 designated by the processing program PG1 that was being executed by the dental processing machine 100. In this embodiment, the type SR14 of the processing tool 8 and the type SR15 of the workpiece 5 are indicated in the processing program PG1. The processing program PG1 is stored in the terminal storage 114 of the operation terminal 110 and the storage 61 of the dental processing machine 100. For example, the information acquisition controller 64 acquires the type SR14 of the processing tool 8 and the type SR15 of the workpiece 5 from the dental processing machine 100.

The error information SR16 of the dental processing machine 100 is information for an error of the dental processing machine 100 which occurred while the workpiece 5 was being processed. There is no particular limitation on contents of the error. The contents of the error include at least a fatal error. Herein, the fatal error is an error that cannot be immediately corrected by the user, and also, is an error that prevents immediate restart of processing by the dental processing machine 100. The error occurs when the workpiece 5 cannot be properly processed. Examples of the error include, for example, an error caused when the processing tool 8 is broken, an error caused when the tool gripper 32 cannot grip the processing tool 8, an error caused when the spindle 31 cannot be rotated at proper rotation speed, and an error caused when the processing mechanism 13 or the clamp 16 cannot be moved to a proper position, or the like. In this embodiment, there is no particular limitation on specific contents of the error information SR16. Error information SR16 includes, for example, an error code. The error code is a specific code given to contents of an error. The contents of the error can be uniquely specified by the error code. When an error occurs in the dental processing machine 100, the information acquisition controller 64 acquires the error information SR16 including an error code corresponding to contents of the error.

The transmitter 66 transmits information (for example, the internal information SR1) for the dental processing machine 100 acquired by the information acquisition controller 64 to the operation terminal 110.

Next, the imaging device 105 illustrated in FIG. 1 will be described. The imaging device 105 captures an image of the processing space 26 (see FIG. 3) of the dental processing machine 100. The imaging device 105 captures an image of the inside of the processing space 26 in which cutting processing is performed on the workpiece 5 by the processing mechanism 13 using the processing tool 8. As used herein the term "image" means a visual representation of an event which is fixed on a medium. In this embodiment, the term "image" includes a moving image or a still image.

Note that there is no particular limitation on the type of the imaging device 105. For example, the imaging device 105 is a camera that can capture a moving image or a still image. As described above, in this embodiment, one imaging device 105 is provided for one dental processing machine 100. However, the number of the imaging devices 105 provided for one dental processing machine 100 is not limited to one. The number of the imaging devices 105 may be two or more.

There is no particular limitation on a position of the imaging device 105 relative to the dental processing machine 100. The imaging device 105 may be arranged in a position in which the imaging device 105 can image a state of inside of the processing space 26 of the dental processing machine 100 in which the workpiece 5 is being processed. As long as the imaging device 105 can image the state in which the workpiece 5 is being processed, the imaging device 105 may be arranged inside the main case 11 (more specifically, the processing space 26) and may be arranged in a position which is outside the main body 11 and in which the inside of the processing space 26 can be imaged through the window 12a of the cover 12 (see FIG. 2). Note that, when the imaging device 105 is arranged in the processing space 26, the imaging device 105 is preferably arranged in a position in which the processing powder generated during cutting processing performed on the workpiece 5 does not easily adhere to the imaging device 105. In this case, for example, the imaging device 105 may be arranged over the processing space 26. For example, when the number of the imaging devices 105 provided in one dental processing machine 100 is three, the imaging devices 105 are a first imaging device, a second imaging device, and a third imaging device. In this case, the first imaging device is arranged, for example, in front of the clamp 16. The second imaging device is arranged, for example, above the tool magazine 14 and the clamp 16. The third imaging device is arranged, for example, in a position in which a state of the above described disk changer can be imaged (that is, for example, a position above the disk changer).

The operation terminal 110 illustrated in FIG. 1 will be described next. In this embodiment, the plurality of operation terminals 110 has the same configuration. Therefore, a configuration of one of the operation terminals 110 will be described below. The operation terminal 110 is used to operate the dental processing machine 100. The operation terminal 110 is realized, for example, by a personal computer. The operation terminal 110 may be realized by a general-purpose computer and may be realized by a dedicated computer.

As illustrated in FIG. 1, one or more dental processing machines 100 are communicably connected to the operation terminal 110. The operation terminal 110 can operate the one or more dental processing machines 100 communicably connected thereto. One or more imaging devices 105 are also communicably connected to the operation terminal 110. As illustrated in FIG. 5, the operation terminal 110 includes, for example, a terminal display device 111, a terminal operation section 112, and a terminal controller 113.

There is no particular limitation on a type of the terminal display device 111. The terminal display device 111 is, for example, a display of a desktop-type or notebook-type personal computer. The terminal operation section 112 is, for example, a keyboard or a mouse of the personal computer. However, the terminal operation section 112 may be a touch panel provided on the terminal display device 111.

The terminal controller 113 is, for example, a microcomputer. There is no particular limitation on a configuration of a hardware of the microcomputer. For example, the microcomputer includes a CPU, a ROM, a RAM, a storage, or the like. The terminal controller 113 is communicably connected to the terminal display device 111 and the terminal operation section 112.

A dedicated application used for operating the dental processing machine 100 is installed in the terminal controller 113. The user can operate the dental processing machine 100 by using the terminal operation section 112 to display the application on the terminal display device 111 and operating the application via the terminal operation section 112. The terminal controller 113 includes a terminal storage 114, a terminal status acquirer 115, a terminal image acquirer 116, a terminal list acquirer 117, a terminal internal information acquirer 118, and a terminal transmitter 119. Each element of the terminal controller 113 may be configured by a software and may be configured by a hardware. Each element of the terminal controller 113 may be realized by one or more processors and may be incorporated in a circuit. Note that each element of the terminal controller 113 will be described in detail later.

Next, the server 120 illustrated in FIG. 1 will be described. One or more operation terminals 110 are communicably connected to the server 120, and one or more dental processing machines 100 are communicably connected to the server 120 via the one or more operation terminals 110. One or more imaging devices 105 are also communicably connected to the server 120 via the one or more operation terminals 110. For example, when the status display system 1 is realized by cloud computing, the server 120 is a cloud. The server 120 is an example of a storage of the present invention.

Next, the status display device 200 will be described. The status display device 200 collectively manages and displays a processing status or information for a plurality of dental processing machines 100. Similar to the operation terminal 110, the status display device 200 is realized, for example, by a personal computer. The status display device 200 may be realized by a general-purpose computer and may be realized by a dedicated computer.

As illustrated in FIG. 1, the status display device 200 is communicably connected to the server 120. The status display device 200 acquires the processing status S1, the internal information SR1, the processing program list PL1, and an image M1 for each of the dental processing machines 100 stored in the server 120 and displays, as illustrated in FIG. 6, the processing status S1, the internal information SR1, the processing program list PL1, and the image M1 for each of the dental processing machines 100. As illustrated in FIG. 5, the status display device 200 includes a display device 201, an operation section 202, and a display processing device 210.

There is no particular limitation on a type of the display device 201. The display device 201 is, for example, a display of a mobile terminal. However, the display device 201 may be a display of a desktop-type or notebook-type personal computer.

The operation section 202 is operated by the user. For example, the user can switch display on the display device 201 by operating the operation section 202. Note that there is no particular limitation on the type of the operation section 202. For example, the operation section 202 is a touch panel provided on a screen of the display device 201. However, the operation section 202 may be a keyboard or a mouse of the personal computer.

The display processing device 210 acquires information for each of the dental processing machines 100 from the server 120 and displays the information for each of the dental processing machines 100 on the display device 201. Note that there is no particular limitation on a configuration of the display processing device 210. The display processing device 210 is, for example, a microcomputer. The display processing device 210 includes a CPU, a ROM, a RAM, a storage, or the like. In this embodiment, the display processing device 210 is a separate device from the server 120. However, the display processing device 210 may be integrally formed with the server 120. The display processing device 210 is communicably connected to the server 120 via a wired communication or a wireless communication. Although not illustrated, the display processing device 210 is communicably connected to the operation terminal 110. In this embodiment, the display processing device 210 is a separate device from the operation terminal 110. However, the display processing device 210 may be integrally formed with the operation terminal 110. In this case, the display processing device 210 may be incorporated in the terminal controller 113 of the operation terminal 110.

In this embodiment, as illustrated in FIG. 5, the display processing device 210 includes a display storage 211, a status acquisition instruction controller 212, a status acquirer 213, a status creation controller 215, an image acquisition instruction controller 223, an image acquirer 225, a list acquisition instruction controller 233, a list acquirer 235, an internal information acquisition instruction controller 243, an internal information acquirer 245, and a display processing controller 251. Each element of the display processing device 210 may be configured by a software and may be configured by a hardware. Each element of the display processing device 210 may be realized by one or more processors and may be incorporated in a circuit. Note that each element of the display processing device 210 will be described in detail later.

In this embodiment, as illustrated in FIG. 6, one status screen DP1 is displayed on the display device 201. On the status screen DP1, a status list SL1, the image M1, the processing program list PL1, and the internal information SR1 are arranged. Each of the status list SL1, the image M1, the processing program list PL1, and the internal information SR1 is created and displayed by corresponding one of the dental processing machines 100, the operation terminal 110, the server 120, and the status display device 200. The status list SL1, the image M1, the processing program list PL1, and the internal information SR1 will be described in detail below.

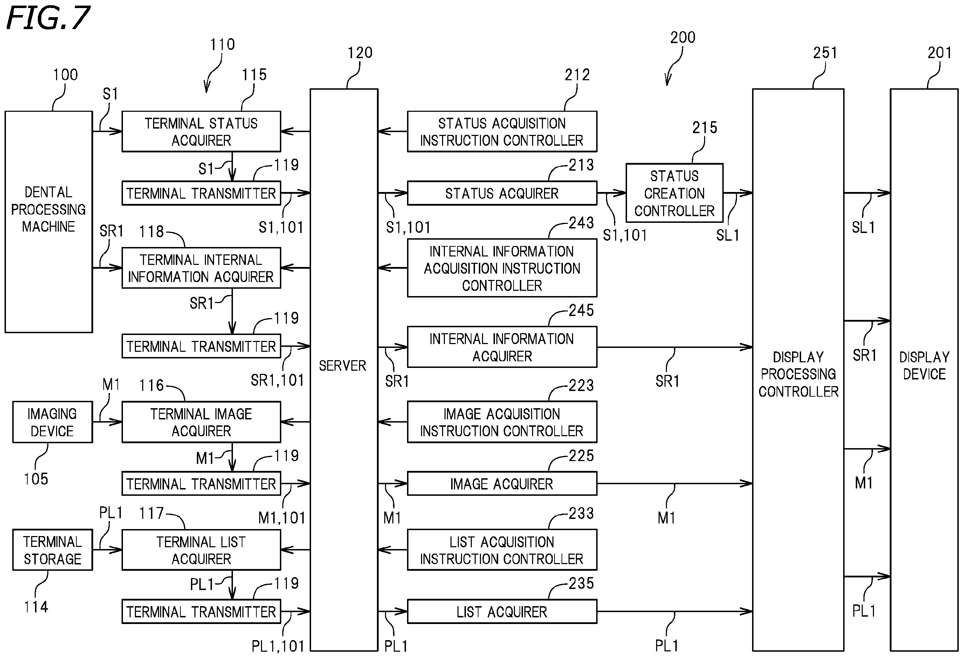

The status list SL1 is a list in which the processing status S1 of each of the dental processing machines 100 is indicated. In this embodiment, as described above, the processing status S1 includes the operation state S11, the non-operation state S12, and the error state S13. FIG. 7 is a diagram illustrating a flow of data when the status screen DP1 is displayed on the display device 201. As illustrated in FIG. 7, the status list SL1 is created by the terminal status acquirer 115 of the operation terminal 110 and the status acquisition instruction controller 212, the status acquirer 213, and the status creation controller 215 of the status display device 200.

In this embodiment, the status acquisition instruction controller 212 of the status display device 200 instructs the operation terminal 110 communicably connected to the status display device 200 to acquire information of the processing status S1 for each of the plurality of dental processing machines 100 via the server 120. At this time, the terminal status acquirer 115 of the operation terminal 110 acquires the processing status S1 from each of the dental processing machines 100 communicably connected thereto. After the processing status S1 of the dental processing machine 100 is acquired from the dental processing machine 100, the terminal transmitter 119 transmits the processing status S1 to the server 120. The server 120 stores the processing status S1 in each dental processing machine100.

Note that, in this embodiment, a specific device ID 101 is given to each dental processing machine 100. Each dental processing machine 100 can be uniquely specified by the device ID 101. Herein, the terminal transmitter 119 transmits the processing status S1 and the device ID 101 to the server 120. When the server 120 stores the processing status S1 for each of the dental processing machines 100, the server 120 stores the processing status S1 in association with the device ID 101. The server 120 associates the device ID 101 and the processing status S1 with each other, for example, using a table, and thus, stores the processing status S1 of each of the dental processing machines 100.

The status acquirer 213 of the display processing device 210 acquires the processing status S1, the device ID 101, or the like of each of the dental processing machines 100 which are stored in the server 120. The status creation controller 215 creates the status list SL1 of the respective processing statuses S1 of the plurality of dental processing machines 100 which have been acquired by the status acquirer 213. Note that there is no particular limitation on a configuration of the status list SL1. In this embodiment, as illustrated in FIG. 6, the status list SL1 is a list in which the device ID 101 given to the dental processing machine 100 and the processing status S1 of the dental processing machine 100 corresponding to the device ID 101 are associated with each other. Note that, in the status list SL1, a name 102a of the dental processing machine 100 arbitrarily given by the user or a machine model name 102b and a machine number 102c of the dental processing machine 100 may be associated. In the example of FIG. 6, each of the processing statuses S1 corresponding to a1 and a4 of the device ID 101 is the operation state S11. This means that the dental processing machines 100 the devices ID 101 of which are a1 and a4 are being processed. In the example of FIG. 6, it is also indicated that an error has occurred in the dental processing machine 100 the device ID 101 is a5.

In this embodiment, the status list SL1 is configured such that one dental processing machine 100 can be selected from the plurality of dental processing machines 100 (herein the dental processing machines 100 the device IDs of which are a1, a2, a3, a4 and a5) that belong to the status list SL1 via the operation section 202. That is, the user can operate the operation section 202 to select one dental processing machine 100 from the plurality of dental processing machines 100 displayed in the status list SL1. The display processing controller 251 displays the status list SL1 having the above described configuration on the display device 201.

As illustrated in FIG. 6, the image M1 displayed on the display device 201 is the image M1 of the processing space 26 in the one dental processing machine 100 selected from the plurality of dental processing machines 100 and is captured by the imaging device 105 (see FIG. 1). In this embodiment, as illustrated in FIG. 7, the image M1 displayed on the display device 201 is determined by the terminal image acquirer 116 of the operation terminal 110 and the image acquisition instruction controller 223 and the image acquirer 225 of the status display device 200.

In this embodiment, the image acquisition instruction controller 223 of the status display device 200 instructs the operation terminal 110 to acquire the image M1 for the one dental processing machine 100 selected from the plurality of dental processing machines 100 by the user via the server 120. Herein, the user operates the operation section 202 to select one dental processing machine 100 from the status list SL1 displayed on the display device 201. The image acquisition instruction controller 223 instructs the operation terminal 110 to acquire the image M1 for the one dental processing machine 100 selected from the status list SL1. In the example of FIG. 6, the dental processing machine 100 the device ID 101 of which is a1 is selected from the status list SL1. In this case, the image acquisition instruction controller 223 instructs the operation terminal 110 to which the dental processing machine 100 the device ID 101 of which is a1 is connected to acquire the image M1.

At this time, the terminal image acquirer 116 of the operation terminal 110 acquires the image M1 from the imaging device 105 for the dental processing machine 100 the device ID 101 of which is a1. After the image M1 is acquired from the imaging device 105, the terminal transmitter 119 transmits the image M1 and the device ID 101 to the server 120. The server 120 stores the image M1 in association with the device ID 101.

The image acquirer 225 of the display processing device 210 acquires the image M1 that is stored in the server 120 and is associated with the dental processing machine 100 the device ID 101 of which is a1 in the example of FIG. 6. The display processing controller 251 displays the image M1 acquired by the image acquirer 225 on the display device 201 (see FIG. 6).

The processing program list PL1 displayed on the display device 201 illustrated in FIG. 6 is a list of the processing programs PG1 that are executed by the one dental processing machine 100 selected from the plurality of dental processing machines 100. In this embodiment, as illustrated in FIG. 7, the processing program list PL1 displayed on the display device 201 is determined by the terminal list acquirer 117 of the operation terminal 110 and the list acquisition instruction controller 233 and the list acquirer 235 of the status display device 200.

In this embodiment, the list acquisition instruction controller 233 of the status display device 200 instructs the operation terminal 110 to acquire the processing program list PL1 for the one dental processing machine 100 selected from the plurality of dental processing machines 100 by the user via the server 120. Herein, the user operates the operation section 202 to select the one dental processing machine 100 from the status list SL1 displayed on the display device 201. The list acquisition instruction controller 233 instructs the operation terminal 110 to acquire the processing program list PL1 for the dental processing machine 100 selected from the status list SL1. In the example of FIG. 6, the dental processing machine 100 the device ID 101 of which is a1 is selected, and therefore, the list acquisition instruction controller 233 instructs the operation terminal 110 to which the dental processing machine 100 the device ID 101 of which is a1 is connected to acquire the processing program list PL1.

At this time, the terminal list acquirer 117 of the operation terminal 110 acquires the processing program list PL1 of the dental processing machine 100 the device ID 101 of which is a1. Note that, in this embodiment, the processing program list PL1 for the dental processing machine 100 is stored in the terminal storage 114 of the operation terminal 110. Therefore, the terminal list acquirer 117 can acquire the processing program list PL1 from the terminal storage 114. However, the terminal list acquirer 117 may be configured to acquire the processing program list PL1 from the dental processing machine 100. After the terminal list acquirer 117 acquires the processing program list PL1, the terminal transmitter 119 transmits the processing program list PL1 and the device ID 101 to the server 120. The server 120 stores the processing program list PL1 in association with the device ID 101.

The list acquirer 235 of the display processing device 210 acquires the processing program list PL1 that is stored in the server 120 and is associated with the dental processing machine 100 the device ID 101 of which is a1 in the example of FIG. 6. The display processing controller 251 displays the processing program list PL1 acquired by the list acquirer 235 on the display device 201. Note that the display processing controller 251 may be configured to, when the display processing controller 251 displays the processing program list PL1, as illustrated in FIG. 6, display information 103 on whether execution of the processing programs PG1 displayed in the processing program list PL1 has ended as well with the processing program list PL1. The information 103 on whether execution of the processing programs PG1 has ended can be acquired from the dental processing machine 100 by the terminal list acquirer 117. In the example of FIG. 6, the processing programs PG1 of Sample 1 and Sample 2 are processing programs that have been already executed, and information 103a of "END" is given to the processing programs PG1 of Sample 1 and Sample 2. The processing program PG1 of Sample 3 is a processing program that is currently being executed, and information 103b of "BEING PROCESSED" is given to the processing program PG1 of Sample 3. The processing programs PG1 of Sample 4 and Sample 5 are processing programs that will be executed from now, and information 103c of "BEFORE PROCESSING" is given to the processing programs PG1 of Sample 4 and Sample 5.

The internal information SR1 displayed on the display device 201 is the internal information SR1 of the one dental processing machine 100 selected from the plurality of dental processing machines 100. In this embodiment, as illustrated in FIG. 7, the internal information SR1 displayed on the display device 201 is determined by the terminal internal information acquirer 118 of the operation terminal 110 and the internal information acquisition instruction controller 243 and the internal information acquirer 245 of the status display device 200.

In this embodiment, the internal information acquisition instruction controller 243 of the status display device 200 instructs the operation terminal 110 to acquire the internal information SR1 of the one dental processing machine 100 selected from the plurality of the dental processing machines 100 by the user via the server 120. Herein, the user operates the operation section 202 to select one dental processing machine 100 from the status list SL1 displayed on the display device 201. The internal information acquisition instruction controller 243 instructs the operation terminal 110 to acquire the internal information SR1 of the dental processing machine 100 selected from the status list SL1. In the example of FIG. 6, the dental processing machine 100 the device ID 101 of which is a1 is selected, and therefore, the internal information acquisition instruction controller 243 instructs the operation terminal 110 to which the dental processing machine 100 the device ID 101 of which is a1 is connected to acquire the internal information SR1.

At this time, the terminal internal information acquirer 118 of the operation terminal 110 acquires the internal information SR1 of the dental processing machine 100 the device ID 101 of which is a1 from the dental processing machine 100. However, the terminal internal information acquirer 118 may be configured to acquire a portion of the internal information SR1 (for example, the type SR14 of the processing tool 8, the type SR15 of the workpiece 5, or the like) from the processing program PG1 stored in the terminal storage 114. After the terminal internal information acquirer 118 acquires the internal information SR1, the terminal transmitter 119 transmits the internal information SR1 and the device ID 101 to the server 120. The server 120 stores the internal information SR1 in association with the device ID 101.

The internal information acquirer 245 of the display processing device 210 acquires the internal information SR1 that is stored in the server 120 and is associated with the dental processing machine 100 the device ID 101 of which is a1 in the example of FIG. 6. The display processing controller 251 displays the internal information SR1 acquired by the internal information acquirer 245 on the display device 201. Herein, as illustrated in FIG. 6, the display processing controller 251 displays, as the internal information SR1, the firmware version SR11, the operation information SR12, the correction value SR13 for origin adjustment for the spindle 31, the type SR14 of the processing tool 8, the type SR15 of the workpiece 5, the error information SR16, or the like on the display device 201.

In this embodiment, the display processing controller 251 displays the status list SL1, the image M1, the processing program list PL1, and the internal information SR1 on the same screen (herein, the status screen DP1). Specifically, as illustrated in FIG. 6, the display processing controller 251 vertically and horizontally splits the status screen DP1 into four portions, and the status list SL1, the image M1, the processing program list PL1, and the internal information SR1 are arranged in upper left, upper right, bottom left, and bottom right portions of the status screen DP1, respectively. However, there is no particular limitation on arrangement positions of the status list SL1, the image M1, the processing program list PL1, and the internal information SR1. The status list SL1, the image M1, the processing program list PL1, and the internal information SR1 may be displayed on separate screens.

In this embodiment, a status update button BT1, an image update button BT2, a list update button BT3, and an internal information update button BT4 are arranged on the display device 201 (specifically, the status screen DP1 displayed on the display device 201). The buttons BT1 to BT4 are pressed by operating the operation section 202 by the user. Herein, when the status update button BT1 is pressed, the status list SL1 displayed on the display device 201 is updated. When the status update button BT1 is pressed, the latest processing status S1 of each dental processing machine 100 is stored in the server 120 by the terminal status acquirer 115 of the operation terminal 110 and the status acquisition instruction controller 212 of the status display device 200. The status acquirer 213 acquires the latest processing status S1 of each dental processing machine 100 which is stored in the server 120, and the status creation controller 215 creates a latest status list SL1. The display processing controller 251 displays the latest status list SL1 on the display device 201.

When the image update button BT2 is pressed, the image M1 displayed on the display device 201 is updated. When the image update button BT2 is pressed, the latest image M1 corresponding to one dental processing machine 100 selected by the user is stored in the server 120 by the terminal image acquirer 116 of the operation terminal 110 and the image acquisition instruction controller 223 of the status display device 200. The image acquirer 225 acquires the latest image M1 stored in the server 120. The display processing controller 251 displays the latest image M1 on the display device 201.

When the list update button BT3 is pressed, the processing program list PL1 displayed on the display device 201 is updated. When the list update button BT3 is pressed, a latest processing program list PL1 of the processing programs PG1 that are executed by the one dental processing machine 100 selected by the user is stored in the server 120 by the terminal list acquirer 117 of the operation terminal 110 and the list acquisition instruction controller 233 of the status display device 200. The list acquirer 235 acquires the latest processing program list PL1 stored in the server 120. The display processing controller 251 displays the latest processing program list PL1 on the display device 201.

When the internal information update button BT4 is pressed, the internal information SR1 displayed on the display device 201 is updated. When the internal information update button BT4 is pressed, latest internal information SR1 of the one dental processing machine 100 selected by the user is stored in the server 120 by the terminal internal information acquirer 118 of the operation terminal 110 and the internal information acquisition instruction controller 243 of the status display device 200. The internal information acquirer 245 acquires the latest internal information SR1 stored in the server 120. The display processing controller 251 displays the latest internal information SR1 on the display device 201.

As described above, in this embodiment, as illustrated in FIG. 6, the processing statuses S1 of the plurality of the dental processing machines 100 are displayed on the display device 201. Therefore, the user can recognize at a glance which dental processing machine 100 is in operation or the like by viewing the processing status S1 of each of the dental processing machines 100 displayed on the display device 201 by the display processing controller 251. The user can also know a detailed status of processing of one dental processing machine 100 selected by the user by viewing the image M1 displayed on the display device 201 by the display processing controller 251. Therefore, the processing status S1 of the dental processing machine 100 installed in a remote place can be known and a detailed status of processing of the dental processing machine 100 installed in the remote place can be known. Accordingly, the status of the dental processing machine 100 installed in the remote place can be easily recognized.

In this embodiment, the processing status S1 includes at least the operation state S11, the non-operation state S12, and the error state S13.
Thus, which one of the dental processing machines 100 is in operation or is not in operation can be recognized at a glance. When an error occurs in the dental processing machine 100, the error state S13 is displayed, and therefore, the dental processing machine 100 in which the error occurred can be easily recognized. The image M1 of the processing space 26 of the dental processing machine 100 in which the error occurred is displayed, and thus, even a user who is in a remote place can easily know a detailed status of the error.

In this embodiment, the list acquirer 235 acquires the processing program list PL1 of the processing programs PG1 that are executed by one dental processing machine 100 selected from the plurality of dental processing machines 100 by the user. The display processing controller 251 displays the processing program list PL1 acquired by the list acquirer 235. Thus, even for a dental processing machine 100 installed in a remote place, what kind of processing program PG1 the dental processing machine 100 executes can be recognized at a glance by viewing the processing program list PL1 displayed by the display processing controller 251.

In this embodiment, the internal information acquirer 245 acquires the internal information SR1 set for the one dental processing machine 100 selected from the plurality of dental processing machines 100 by the user. The display processing controller 251 displays the internal information SR1 acquired by the internal information acquirer 245. Thus, even for a dental processing machine 100 installed in a remote place, the internal information SR1 of the dental processing machine 100 can be known by viewing the internal information SR1 displayed by the display processing controller 251. The user can give a proper instruction to a worker who operates the dental processing machine 100, based on the internal information SR1.

In this embodiment, the image acquisition instruction controller 223 instructs the operation terminal 110 to acquire the image M1 of the one dental processing machine 100 selected from the plurality of dental processing machines 100 by the user. The terminal image acquirer 116 of the operation terminal 110 acquires the image M1 that is to be acquired in accordance with the instruction given by the image acquisition instruction controller 223 from the imaging device 105. The terminal transmitter 119 transmits the image M1 acquired by the terminal image acquirer 116 to the server 120. The image acquirer 225 acquires the image M1 from the server 120. Thus, the image M1 of the dental processing machine 100 that the user desires to view is acquired, and therefore, the image M1 can be efficiently acquired.

In this embodiment, the status list SL1 displayed on the display device 201 is configured such that one dental processing machine 100 can be selected from the plurality of the dental processing machines 100 indicated in the status list SL1 via the operation section 202. The image acquirer 225 acquires, from the plurality of dental processing machines 100 indicated on the status list SL1, the image M1 for the one dental processing machine 100 selected by the user via the operation section 202. Thus, the image M1 of the dental processing machine 100 that the user desires to view can be acquired by a simple method in which one dental processing machine 100 is selected from the status list SL1.

In this embodiment, the display processing controller 251 displays the status list SL1 created by the status creation controller 215, the image M1 acquired by the image acquirer 225, the processing program list PL1 acquired by the list acquirer 235, and the internal information SR1 acquired by the internal information acquirer 245 on the same screen (herein, the status screen DP1). Thus, the user can view the status list SL1, the image M1, the processing program list PL1, and the internal information SR1 at one time, and therefore, can easily understand the status of the dental processing machine 100.

In this embodiment, the status update button BT1 that is used to update the status list SL1 displayed on the display device 201 and the image update button BT2 that is used to update the image M1 displayed on the display device 201 are displayed on the display device 201. When the status update button BT1 is pressed via the operation section 202, the status acquirer 213 acquires information of the processing status S1 of each of the plurality of dental processing machines 100. When the image update button BT2 is pressed via the operation section 202, the image acquirer 225 acquires the image M1 of one dental processing machine 100 selected by the user. In this embodiment, the list update button BT3 that is used to update the processing program list PL1 displayed on the display device 201 and the internal information update button BT4 that is used to update the internal information SR1 displayed on the display device 201 are displayed on the display device 201. When the list update button BT3 is pressed via the operation section 202, the list acquirer 235 acquires the processing program list PL1 in which the processing programs PG1 that are executed by the one dental processing machine 100 selected by the user. When the internal information update button BT4 is pressed via the operation section 202, the internal information acquirer 245 acquires the internal information SR1 of the one dental processing machine 100 selected by the user.

As described above, by pressing the buttons BT1 to BT4, the user can select, among the status list SL1, the processing program list PL1, the image M1, and the internal information SR1, only information that the user desires to update, and update the selected information.

In the above described embodiment, for example, the status acquisition instruction controller 212 instructs the operation terminal 110 to acquire the processing status S1 via the server 120. The status acquirer 213 acquires the processing status S1 from the server 120. However, the status acquisition instruction controller 212 may be configured to directly instruct the operation terminal 110 to acquire the processing status S1. The status acquirer 213 may be configured to acquire the processing status S1 directly from the operation terminal 110. Similarly, the image acquisition instruction controller 223 may be configured to directly instruct the operation terminal 110 to acquire the image M1. The image acquirer 225 may be configured to acquire the image M1 directly from the operation terminal 110. The list acquisition instruction controller 233 may be configured to directly instruct the operation terminal 110 to acquire the processing program list PL1. The list acquirer 235 may be configured to acquire the processing program list PL1 directly from the operation terminal 110. The internal information acquisition instruction controller 243 may be configured to directly instruct the operation terminal 110 to acquire the internal information SR1 of the dental processing machine 100. The internal information acquirer 245 may be configured to acquire the internal information SR1 of the dental processing machine 100 directly from the operation terminal 110.

### <First Modified Example>

Next, a first modified example will be described. The first modified example relates to a maintenance history display system 1001 for a dental processing machine.

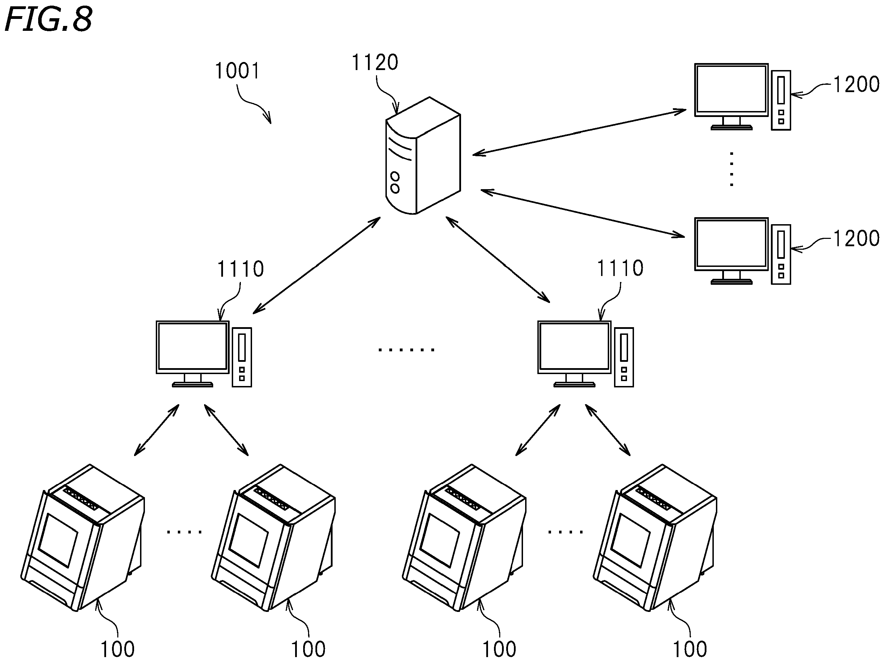

FIG. 8 is a conceptual view of a maintenance history display system 1001 according to the first modified example. The maintenance history display system 1001 collectively manages a history of maintenance performed on each of a plurality of dental processing machines 100. First, an outline of the maintenance history display system 1001 will be described.

As illustrated in FIG. 8, the maintenance history display system 1001 includes a dental processing machine 100, an operation terminal 1110, a server 1120, and a maintenance history display device 1200. There is no particular limitation on the number of the dental processing machines 100 according to this modified example. The number of the dental processing machines 100 may be one or more. The operation terminal 1110 is used by a user for operating the dental processing machine 100. One or more dental processing machines 100 are communicably connected to the operation terminal 1110. Note that there is no particular limitation on the number of the operation terminals 1110 according to this modified example. The number of the operation terminals 1110 may be one or more. The server 1120 collectively manages information for the plurality of dental processing machines 100. One or more dental processing machines 100 are connected to the server 1120. In this modified example, the plurality of operation terminals 1110 is communicably connected to the server 1120 and the plurality of dental processing machines 100 is connected to the server 1120 via the operation terminals 1110.

The maintenance history display device 1200 manages and displays a history of maintenance performed on the dental processing machines 100. The maintenance history display device 1200 is communicably connected to the server 1120. Note that there is no particular limitation on the number of maintenance history display devices 1200. The number of maintenance history display devices 1200 may be one or more. Note that the maintenance history display system 1001 may be realized by a client-server type system and may be realized by cloud computing. The dental processing machine 100, the operation terminal 1110, the server 1120, and the maintenance history display device 1200 will be described in detail below.

In this modified example, the dental processing machine 100 has the same configuration as that of the dental processing machine 100 of the above described embodiment except the configuration of the controller 60. Therefore, herein, the description of the dental processing machine 100 is omitted as appropriate, and only a configuration of a controller 1060 which will be described later.

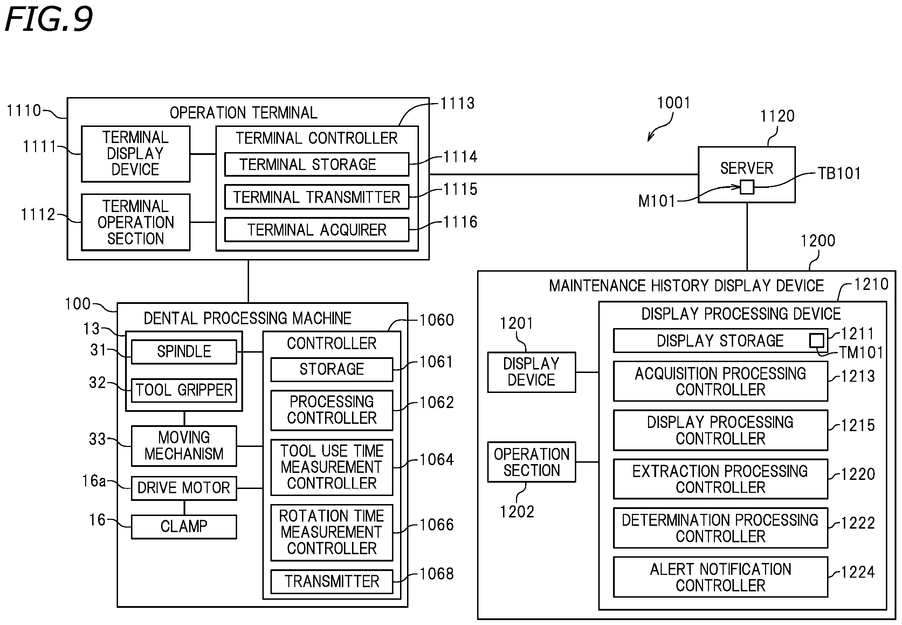

FIG. 9 is a block diagram of the maintenance history display system 1001. As illustrated in FIG. 9, the dental processing machine 100 according to this modified example includes a controller 1060. The controller 1060 controls processing of the workpiece 5 (see FIG. 4). The controller 1060 is formed of a microcomputer and is provided inside the man body 11 (see FIG. 2). The controller 1060 includes, for example, a central processing unit (CPU), a ROM that stores a program or the like which is executed by the CPU, a RAM, or the like. Herein, control of processing of the workpiece 5 by the controller 1060 is performed using the program stored in the microcomputer.

The controller 1060 is communicably connected to the spindle 31 and controls rotation of the spindle 31. The controller 1060 is communicably connected to the drive motor 16a that rotates the clamp 16 around the Y axis (θy) and controls the drive motor 16a. Although not illustrated, the controller 1060 is communicably connected to the moving mechanism 33 that moves the processing mechanism 13 in the left-right direction and the up-down direction and controls the moving mechanism 33.

In this modified example, the controller 1060 includes a storage 1061, a processing controller 1062, a tool use time measurement controller 1064, a rotation time measurement controller 1066, and a transmitter 1068. Each element of the controller 1060 may be configured by a software and may be configured by a hardware. Each element of the controller 1060 may be realized by one or more processors and may be incorporated in a circuit.

In this modified example, similar to the processing controller 62 (see FIG. 5) of the above described embodiment, the processing controller 1062 controls the processing mechanism 13, the clamp 16, and the moving mechanism 33 to process the workpiece 5. The processing controller 1062 integrally controls, as a whole, an operation of the clamp 16 with an operation of the processing mechanism 13. By doing so, a relative positional relationship between the workpiece 5 supported by the clamp 16 and the processing tool 8 is changed in a three-dimensional manner, and thus, highly accurate processing by five-axis control in the X-axis direction, the Y-axis direction, the Z-axis direction, the rotation direction around the X axis (θx), and the rotation direction around the Y axis direction (θy) can be realized. In this modified example, processing on the workpiece 5 can be performed by causing the edge tool 8a (see FIG. 3) of the processing tool 8 rotated by the spindle 31 of the processing mechanism 13 to abut on the workpiece 5 supported by the clamp 16. Herein, the processing tool 8 is caused to abut on the workpiece 5 in an arbitrary position at an arbitrary angle, thereby producing an object.

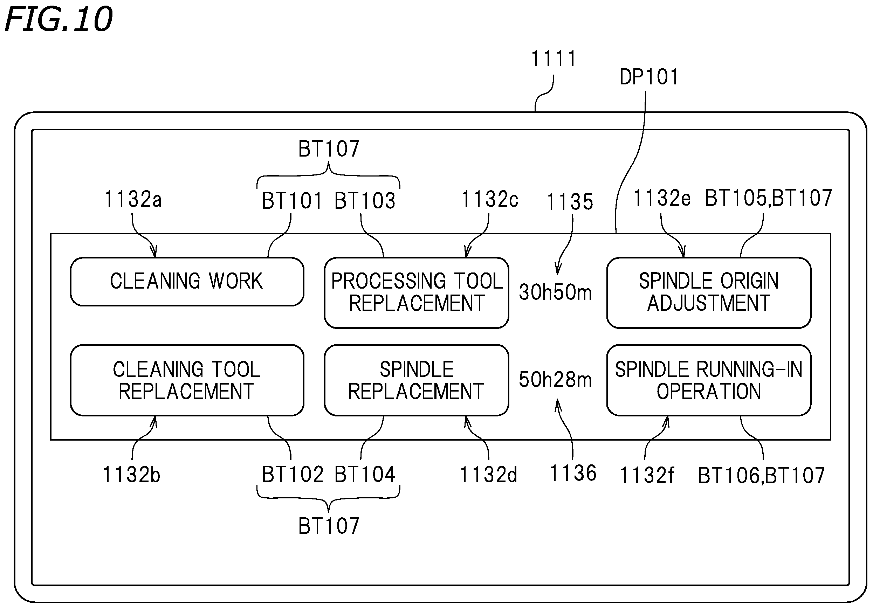

The tool use time measurement controller 1064 measures a tool use time 1135 (see FIG. 10) during which the processing tool 8 is used. Herein, a time during which the processing tool 8 is gripped by the tool gripper 32 is the tool use time 1135. In this modified example, the plurality of processing tools 8 is selectively used, and therefore, the tool use time measurement controller 1064 measures the tool use time 1135 for each of the plurality of processing tools 8. Note that the tool use time 1135 of the processing tool 8 which has been measured by the tool use time measurement controller 1064 is stored in the storage 1061.

The rotation time measurement controller 1066 measures a spindle rotation time 1136 (see FIG. 10) of the spindle 31. The rotation time 1136 of the spindle 31 is a time during which the spindle 31 rotates during processing of the workpiece 5 by the dental processing machine 100. Note that the spindle rotation time 1136 measured by the rotation time measurement controller 1066 is stored in the storage 1061.

The transmitter 1068 transmits the tool use time 1135 for each processing tool 8 which has been measured by the tool use time measurement controller 1064 and the spindle rotation time 1136 of the spindle 31 which has been measured by the rotation time measurement controller 1066 to the operation terminal 1110.

The operation terminal 1110 illustrated in FIG. 8 will be described next. In this modified example, the plurality of operation terminals 1110 has the same configuration. Therefore, a configuration of one of the operation terminals 1110 will be described below. Similar to the operation terminal 110 (see FIG. 1) of the above described embodiment, the operation terminal 1110 is used to operate the dental processing machine 100. The operation terminal 1110 is realized, for example, by a personal computer. The operation terminal 1110 may be realized by a general-purpose computer and may be realized by a dedicated computer.

As illustrated in FIG. 8, one or more dental processing machines 100 are communicably connected to the operation terminal 1110. The operation terminal 1110 can operate the one or more dental processing machines 100 communicably connected thereto. As illustrated in FIG. 9, the operation terminal 1110 includes, for example, a terminal display device 1111, a terminal operation section 1112, and a terminal controller 1113.

In this modified example, the terminal display device 1111 has a similar configuration to that of the terminal display device 111 (see FIG. 5) of the above described embodiment. The terminal operation section 1112 has a similar configuration to that of the terminal operation section 112 (see FIG. 5) of the above described embodiment. That is, the terminal display device 1111 is, for example, a display of a desktop-type or notebook-type personal computer. The terminal operation section 1112 is, for example, a keyboard or a mouse of the personal computer. However, the terminal operation section 1112 may be a touch panel provided on the terminal display device 1111.

The terminal controller 1113 is, for example, a microcomputer. There is no particular limitation on a configuration of a hardware of the microcomputer. For example, the microcomputer includes a CPU, a ROM, a RAM, a storage, or the like. The terminal controller 1113 is communicably connected to the terminal display device 1111 and the terminal operation section 1112.

A dedicated application used for operating the dental processing machine 100 is installed in the terminal controller 1113. The user can operate the dental processing machine 100 by displaying the application on the terminal display device 1111 and operating the application via the terminal operation section 1112. The terminal controller 1113 includes a terminal storage 1114, a terminal transmitter 1115, and a terminal acquirer 1116.

FIG. 10 is a view illustrating an example of the terminal display device 1111. As illustrated in FIG. 10, for example, a maintenance screen DP101 is displayed on the terminal display device 1111. The maintenance screen DP101 is used when maintenance is performed on the dental processing machine 100 or after the maintenance has been performed. In this modified example, when maintenance performed on the dental processing machine 100 by the user ends, the user presses a button that is arranged on the maintenance screen DP101 and corresponds to maintenance contents via the terminal operation section 1112 to notify the operation terminal 1110 of end of the maintenance.

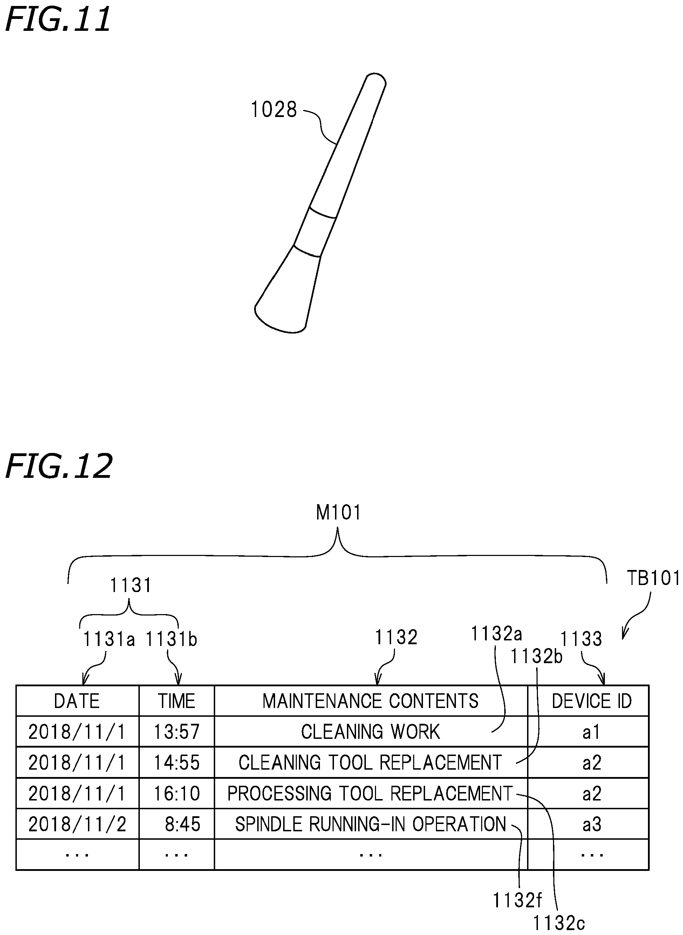

Maintenance includes a plurality of maintenance contents 1132 (see FIG. 12). As illustrated in FIG. 10, examples of the maintenance contents 1132 include, for example, cleaning work 1132a, cleaning tool replacement 1132b, processing tool replacement 1132c, spindle replacement 1132d, spindle origin adjustment 1132e, and spindle running-in operation 1132f. Note that some other maintenance contents 1132 than the above described contents may be included. In this modified example, maintenance buttons BT107 are arranged on the maintenance screen DP101. The maintenance buttons BT107 include six buttons BT101 to BT106. Herein, a cleaning work button BT101 corresponding to the cleaning work 1132a and a cleaning tool replacement button BT102 corresponding to the cleaning tool replacement 1132b are arranged on the maintenance screen DP101. A processing tool replacement button BT103 corresponding to the processing tool replacement 1132c and a spindle replacement button BT104 corresponding to the spindle replacement 1132d are arranged on the maintenance screen DP101. Moreover, an origin adjustment button BT105 corresponding to the spindle origin adjustment 1132e and a running-in operation button BT106 corresponding to the spindle running-in operation 1132f are arranged on the maintenance screen DP101.

In this modified example, the cleaning work 1132a is maintenance of cleaning the processing space 26 (see FIG. 3) of the dental processing machine 100. Processing powder generated during cutting processing performed on the workpiece 5 by the processing tool 8 remains in the processing space 26. The cleaning work 1132a is, for example, work of removing the processing powder remaining in the processing space 26 by the user using a cleaning tool 1028 (see FIG. 11). For example, when the cleaning work 1132a for the dental processing machine 100 ends, the user operates the terminal operation section 1112 and presses the cleaning work button BT101. By pressing the cleaning work button BT101, the operation terminal 1110 recognizes that the cleaning work 1132a has been performed.

The cleaning tool replacement 1132b is maintenance in which an old cleaning tool 1028 (see FIG. 11) used in the cleaning work 1132a is replaced with a new cleaning tool 1028. There is no particular limitation on a type of the cleaning tool 1028. The cleaning tool 1028 is, for example, a brush.
Therefore, the cleaning tool 1028 is a consumable and is preferably replaced with a new cleaning tool 1028 after being used to some extent. For example, when the cleaning tool 1028 is replaced with a new cleaning tool 1028, the user operates the terminal operation section 1112 and presses the cleaning tool replacement button BT102. By pressing the cleaning tool replacement button BT102, the operation terminal 1110 recognizes that the cleaning tool 1028 has been replaced.

The processing tool replacement 1132c is maintenance in which an old processing tool 8 is replaced with a new processing tool 8 among the processing tools 8 of the same type. The processing tool 8 is worn out during processing of the workpiece 5 in some cases, and therefore, is a consumable. Therefore, the processing tool 8 is preferably replaced with a new processing tool 8 of the same type after being used to some extent. For example, when the processing tool 8 is replaced with a new processing tool 8 among the processing tools 8 of the same type, the user operates the terminal operation section 1112 and presses the processing tool replacement button BT103. By pressing the processing tool replacement button BT103, the operation terminal 1110 recognizes that the processing tool 8 has been replaced. Note that the number of the processing tool replacement buttons BT103 is more than one, and is the number of the processing tools 8 that can be stored in the tool magazine 14. Note that, in an example of FIG. 10, one processing tool replacement button BT103 is illustrated. However, in an actual situation, a plurality of processing tool replacement buttons BT103 is arranged.

In this modified example, the tool use time 1135 is displayed on the maintenance screen DP101. The tool use time 1135 is, for example, a use time of the processing tool 8 which has been measured by the tool use time measurement controller 1064 (see FIG. 9) of the dental processing machine 100. The tool use time 1135 measured by the tool use time measurement controller 1064 is transmitted to the operation terminal 1110 by the transmitter 1068 (see FIG. 5) of the dental processing machine 100. The tool use time 1135 is then displayed on the maintenance screen DP101. Note that, when the processing tool replacement button BT103 is pressed, the corresponding tool use time 1135 is reset.

The spindle replacement 1132d is maintenance in which an old spindle 31 is replaced with a new spindle 31. The spindle 31 is a consumable and, when being used to some extent, becomes a possible cause for an error, such as insufficient rotation or the like. Therefore, the spindle 31 is preferably replaced with a new spindle 31. When the spindle 31 is replaced with a new spindle 31, the user operates the terminal operation section 1112 and presses the spindle replacement button BT104. By pressing the spindle replacement button BT104, the operation terminal 1110 recognizes that the spindle 31 has been replaced.

In this modified example, the spindle rotation time 1136 is displayed on the maintenance screen DP101. The spindle rotation time 1136 is, for example, a rotation time measured by the rotation time measurement controller 1066 (see FIG. 9) of the dental processing machine 100. The spindle rotation time 1136 measured by the rotation time measurement controller 1066 is transmitted to the operation terminal 1110 by the transmitter 1068. The spindle rotation time 1136 is then displayed on the maintenance screen DP101. Note that, when the spindle replacement button BT104 is pressed, the spindle rotation time 1136 is reset.

The spindle origin adjustment 1132e is maintenance in which a position of an origin of the spindle 31 is adjusted. The spindle 31 is moved by the moving mechanism 33 (see FIG. 3), as described above. When the spindle 31 is used for a long time, position displacement of the spindle 31 occurs in some cases. For the spindle 31, a position of origin determined in advance is set and position displacement of the spindle 31 occurs less often by adjusting the position of the origin. In order to reduce the occurrence of the position displacement, the spindle origin adjustment 1132e is preferably performed after the dental processing machine 100 has been used to some extent. For example, when the spindle origin adjustment 1132e is performed, the user operates the terminal operation section 1112 and presses the origin adjustment button BT105. By pressing the origin adjustment button BT105, a position adjustment signal is transmitted to the dental processing machine 100 from the operation terminal 1110. After the dental processing machine 100 receives the position adjustment signal, the dental processing machine 100 performs position adjustment of the spindle 31. By pressing the origin adjustment button BT105, the operation terminal 1110 recognizes that position adjustment of the spindle 31 has been performed.

The spindle running-in operation 1132f is maintenance in which the spindle 31 is caused to rotate in advance before processing of the dental processing machine 100. For example, when the dental processing machine 100 is used after having not been used for a long time, an error due to insufficient rotation of the spindle 31 occurs in some cases. Therefore, after a certain time has been elapsed, the spindle running-in operation 1132f is preferably performed. For example, when the spindle running-in operation 1132f is performed, the user operates the terminal operation section 1112 and presses the running-in operation button BT106. By pressing the running-in operation button BT106, a running-in operation signal is transmitted to the dental processing machine 100 from the operation terminal 1110. The dental processing machine 100 performs the spindle running-in operation 1132f after having received the running-in operation signal. By pressing the running-in operation button BT106, the operation terminal 1110 recognizes that the spindle running-in operation 1132f has been performed.

In this modified example, the number of the maintenance screens DP101 is the number of the dental processing machines 100 connected to the operation terminal 1110. The user selects the dental processing machine 100, and the maintenance screen DP101 corresponding to the selected dental processing machine 100 is displayed on the terminal display device 1111. A device ID 1133 (see FIG. 12) given to the dental processing machine 100, which will be described later, is assigned to each of the plurality of maintenance screens DP101. To which dental processing machine 100 the maintenance screen DP101 corresponds can be recognized from the device ID 1133.

The terminal acquirer 1116 of FIG. 9 acquires maintenance information M101 (see FIG. 12) during maintenance performed on the dental processing machine 100. When one of the maintenance buttons BT107 (the buttons BT101 to BT106 herein) is pressed via the terminal operation section 1112, the terminal acquirer 1116 acquires the maintenance information M101 corresponding to the maintenance button BT107.

Next, the server 1120 illustrated in FIG. 8 will be described. One or more operation terminals 1110 are communicably connected to the server 1120, and one or more dental processing machines 100 are communicably connected to the server 1120 via the one or more operation terminal 1110. For example, when the maintenance history display system 1001 is realized by cloud computing, the server 1120 is a cloud. The server 1120 is an example of the storage.

As illustrated in FIG. 9, a maintenance history table TB101 is stored in the server 1120. FIG. 12 is a table illustrating an example of the maintenance history table TB101. The maintenance history table TB101 is used for managing the maintenance information M101 for maintenance performed on each dental processing machine 100, and is used for collectively managing a history of maintenance performed in each dental processing machine 100. In this modified example, in the maintenance history table TB101, maintenance is managed for each maintenance contents 1132. Note that there is no particular limitation on a configuration of the maintenance history table TB101. For example, in the maintenance history table TB101, the maintenance information M101 is recorded. Herein, in the maintenance history table TB101, a maintenance date and time 1131, the maintenance contents 1132, and the device ID 1133 are associated. In other words, in the maintenance history table TB101, there are items, such as the maintenance date and time 1131, the maintenance contents 1132, the device ID 1133, or the like. As used herein the term "associated" means items being described in the same row in the table. In this modified example, the maintenance date and time 1131, the maintenance contents 1132, and the device ID 1133 are collectively called "maintenance information M101". The maintenance information M101 includes the maintenance date and time 1131, the maintenance contents 1132, and the device ID 1133.

The maintenance date and time 1131 is a date 1131a and a time 1131b when maintenance of the dental processing machine 100 was performed. Specifically, the maintenance date and time 1131 is a date and time when one of the buttons BT101 to BT106 displayed on the terminal display device 1111 was pressed by the user in the operation terminal 1110.

The maintenance contents 1132 are contents of maintenance performed on the dental processing machine 100. Herein, the maintenance contents 1132 include, for example, the cleaning work 1132a, the cleaning tool replacement 1132b, the processing tool replacement 1312c, the spindle replacement 1132d, the spindle origin adjustment 1312e, and the spindle running-in operation 1132f. The device ID 1133 is a specific ID given to each dental processing machine 100. The dental processing machine 100 can be uniquely specified by the device ID 1133.

In this modified example, in the maintenance history table TB101, data of each item is added in accordance with steps described below. For example, when maintenance is performed on the dental processing machine 100, the user presses a corresponding one of the buttons BT101 to BT106 to the maintenance contents 1132 on the maintenance screen DP101 displayed on the terminal display device 1111 and given with the device ID 1133 of the dental processing machine 100 on which the maintenance has been performed, as illustrated in FIG. 10. Thus, the terminal acquirer 1116 sets, as the maintenance date and time 1131, a time and date when the button was pressed and acquires the device ID 1133 for the maintenance screen DP101 and the maintenance contents 1132 corresponding to the pressed button. For example, assume a case in which the user performs the cleaning work 1132a on the dental processing machine 100 the device ID 1133 of which is a1. In this case, the maintenance screen DP101 corresponding to the dental processing machine 100 the device ID 1133 of which is a1 is displayed on the terminal display device 1111. The user operates the terminal operation section 1112 and presses the cleaning work button BT101 arranged on the maintenance screen DP101. At this time, the terminal acquirer 1116 sets, as the maintenance date and time 1131, a time and date when the button BT101 was pressed, acquires a1 that is the device ID 1133 corresponding to the maintenance screen DP101, and acquires the cleaning work 1132a as the maintenance contents 1132 corresponding to the button BT101. The operation terminal 1110 causes the terminal storage 1114 to store the maintenance date and time 1131, the maintenance contents 1132, and the device ID 1133 acquired in the above described manner in association with each other.

The terminal transmitter 1115 of the operation terminal 1110 transmits the maintenance date and time 1131, the maintenance contents 1132, and the device ID 1133 in association with each other to the server 1120. The server 1120 then adds the maintenance date and time 1131, the maintenance contents 1132, and the device ID 1133 received by the server 1120 in association with each other to the maintenance history table TB101. In the above described manner, when maintenance is performed on the dental processing machine 100, the maintenance information M101 is added to the maintenance history table TB101.

Note that the maintenance history table TB101 may be formed of one table and may be formed of a plurality of tables. The maintenance history table TB101 may be stored in the terminal storage 1114 of the operation terminal 1110, in addition to server 120.

Next, the maintenance history display device 1200 will be described. The maintenance history display device 1200 manages and displays a history of the maintenance information M101 (see FIG. 12) for the plurality of dental processing machines 100. Similar to the operation terminal 1110, the maintenance history display device 1200 is realized, for example, by a personal computer. The maintenance history display device 1200 may be realized by a general-purpose computer and may be realized by a dedicated computer.

As illustrated in FIG. 8, the maintenance history display device 1200 is communicably connected to the server 1120. The maintenance history display device 1200 acquires the maintenance information M101 of the maintenance history table TB101 stored in the server 1120, and displays a history of the maintenance information M101 for each dental processing machine 100, based on the maintenance information M101 acquired by the maintenance history display device 1200. As illustrated in FIG. 9, the maintenance history display device 1200 includes a display device 1201, an operation section 1202, and a display processing device 1210.

There is no particular limitation on a type of the display device 1201. The display device 1201 is, for example, a display of a mobile terminal. However, the display device 1201 may be, for example, a display of a desktop-type or notebook-type personal computer.

The operation section 1202 is operated by the user. For example, the user can switch display on the display device 1201 by operating the operation section 1202. Note that there is no particular limitation on the type of the operation section 1202. For example, the operation section 1202 is a touch panel provided on the display device 1201. However, the operation section 1202 may be a keyboard or a mouse of the personal computer.

The display processing device 1210 acquires the maintenance history table TB101 in which the maintenance information M101 is recorded from the server 1120 and displays the history of the maintenance information M101 on the display device 1201. Note that there is no particular limitation on a configuration of the display processing device 1210. The display processing device 1210 is a so-called controller. The display processing device 1210 is, for example, a microcomputer. The display processing device 1210 includes a CPU, a ROM, a RAM, a storage, or the like. In this modified example, the display processing device 1210 is a separate device from the server 1120. However, the display processing device 1210 may be integrally formed with the server 1120. In this modified example, the display processing device 1210 is a separate device from the operation terminal 1110. However, the display processing device 1210 may be integrally formed with the operation terminal 1110. In this case, the display processing device 1210 may be incorporated in the terminal controller 1113 of the operation terminal 1110. In this modified example, the display processing device 1210 is communicably connected to the server 1120 via a wired communication or a wireless communication.

In this modified example, as illustrated in FIG. 8, the display processing device 1210 includes a display storage 1211, an acquisition processing controller 1213, a display processing controller 1215, an extraction processing controller 1220, a determination processing controller 1222, and an alert notification controller 1224. Each element of the display processing device 1210 may be configured by a software and may be configured by a hardware. Each element of the display processing device 1210 may be realized by one or more processors and may be incorporated in a circuit.

The acquisition processing controller 1213 acquires the maintenance history table TB101 stored in the server 1120, thereby acquiring the maintenance information M101. Note that the maintenance information M101 in the maintenance history table TB101 acquired by the acquisition processing controller 1213 may be stored in the display storage 1211.

The display processing controller 1215 displays the maintenance information M101 acquire by the acquisition processing controller 1213 on the display device 1201. Note that there is no particular limitation on how the maintenance information M101 is displayed on the display device 1201. For example, the maintenance information M101 is displayed on the display device 1201 using a table or the like.

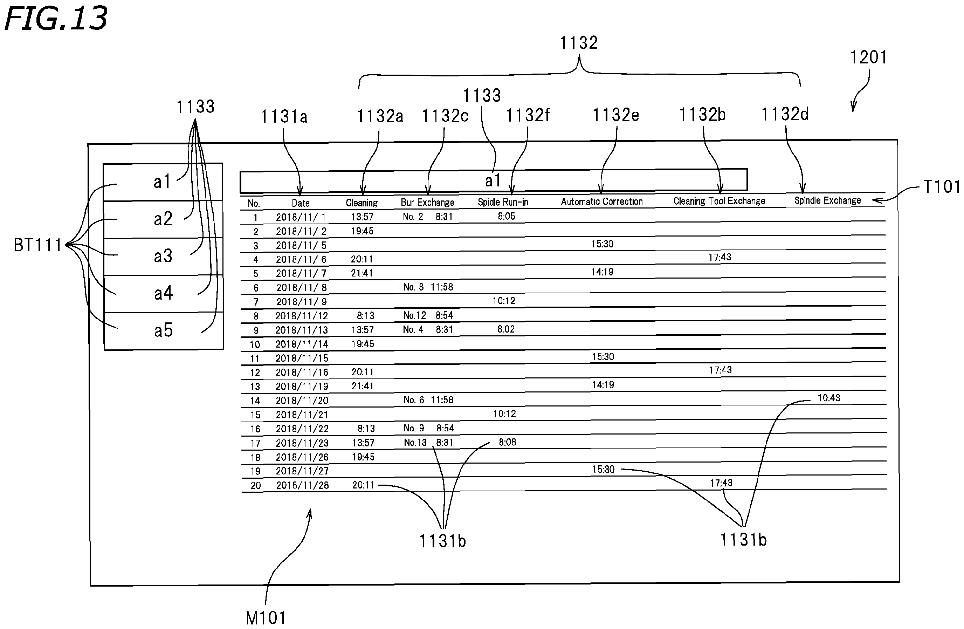

FIG. 13 is a view illustrating an example of the display device 1201. As illustrated in FIG.13, the display processing controller 1215 displays a maintenance history list table T101 for each dental processing machine 100 on the display device 1201. The maintenance history list table T101 is created based on the maintenance information M101 of the maintenance history table TB101 acquired by the acquisition processing controller 1213.

In this modified example, a plurality of selection buttons BT111 is arranged on the display device 1201. The selection buttons BT111 are provided for each dental processing machine 100, and one selection button BT111 corresponds to one dental processing machine 100. The user selects and presses one of the selection buttons BT111 via the operation section 1202, and thus, the maintenance history list table T101 for the dental processing machine 100 corresponding to the selection button BT111 selected by the user is displayed. Note that, in FIG. 13, for convenience of description, the device ID 1133 is given to the selection button BT111. Herein, the five selection buttons BT111 correspond to the dental processing machines 100 the respective device IDs 1133 of which are a1, a2, a3, a4, and a5, and the respective maintenance history list tables T101 of the five dental processing machines 100 can be displayed on the display device 1201. In this modified example, the display processing controller 1215 displays the maintenance information M101 on the display device 1201 for each dental processing machine 100.

Note that there is no particular limitation on a configuration of the maintenance history list table T101. In this modified example, the maintenance history list table T101 is a table related to the maintenance information M101 of maintenance performed in the dental processing machine 100 corresponding to the device ID 1133 selected via the selection button BT111. In the maintenance history list table T101, as columns items (in other words, longitudinal items), the cleaning work 1132a, the processing tool replacement 1132c, the spindle running-in operation 1132f, the spindle origin adjustment 1132e, the cleaning tool replacement 1132b, and the spindle replacement 1132d as the maintenance contents 1132 are displayed. As row items (in other words, lateral items), the date 1131a of the maintenance date and time 1131 is displayed. The date 1131a or the time 1131b of the maintenance date and time 1131 which corresponds to the maintenance contents 1132 is displayed in each cell. Note that a blank cell means that maintenance has not been performed.

For example, on the date 1131a of "2018/11/7," the cleaning work 1132a was performed at the time 1131b of "21:41," and the spindle origin adjustment 1132e was performed at the time 1131b of "14:19". However, on the date 1131a of "2018/11/7", maintenance related to the processing tool replacement 1132c, the spindle running-in operation 1132f, the cleaning tool replacement 1132b, and the spindle replacement 1132d was not performed.

Herein, in each of cells in rows under the processing tool replacement 1132c, "No." indicates the number of the processing tool 8. In this modified example, provided are a plurality of processing tools 8, and a specific number is given to each processing tool 8.

The maintenance history list table T101 is created by the display processing controller 1215, for example, in accordance with steps described below. Herein, steps for creating the maintenance history list table T101 corresponding to the dental processing machine 100 the device ID 1133 of which is a1 will be briefly described. First, the display processing controller 1215 extracts data of a row in which the device ID 1133 is a1 from the maintenance history table TB101 acquired by the acquisition processing controller 1213. That is, the display processing controller 1215 extracts the maintenance date and time 1131 and the maintenance contents 1132 that correspond to the row in which the device ID 1133 is a1.

Next, the display processing controller 1215 displays the maintenance date and time 1131 and the maintenance contents 1132 that have been extracted in association with each other in the maintenance history list table T101. Herein, the time 1131b is displayed in a cell corresponding to the maintenance contents 1132 and the date 1131a of the maintenance date and time 1131. Thus, the maintenance information M101 of maintenance performed in the dental processing machine 100 the device ID 1133 of which is a1 can be displayed on the display device 1201 using the maintenance history list table T101.

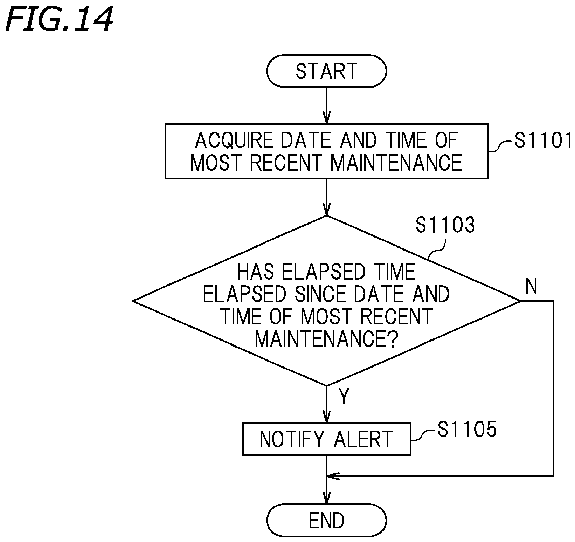

In this modified example, it is possible to notify the user of an alert related to maintenance. Specifically, for each maintenance contents 1132, the maintenance contents 1132 after a predetermined elapsed time TM101 has elapsed since the date and time 1131 when maintenance was performed most recently are notified. FIG. 14 is a flowchart illustrating steps for notifying an alert. In this modified example, notification of an alert related to maintenance is performed in accordance with the flowchart of FIG. 14.

First, in Step S1101, the extraction processing controller 1220 extracts the maintenance date and time 1131 when maintenance was performed most recently for each maintenance contents 1132 from the maintenance history table TB101. In other words, the extraction processing controller 1220 extracts the maintenance date and time 1131 corresponding to the maintenance contents 1132 of the maintenance performed most recently from the same maintenance contents 1132 in the maintenance information M101 acquired by the acquisition processing controller 1213. In this modified example, for each device ID 1133 and for each maintenance contents 1132, the maintenance date and time 1131 corresponding to the maintenance contents 1132 of the most recent maintenance is extracted. In the example of FIG. 13, for each column in the maintenance history list table T101, the maintenance date and time 1131 descried in a bottom row is extracted. However, when the maintenance contents 1132 is the processing tool replacement 1132c, the maintenance date and time 1131 of the most recent maintenance is extracted for each type of the processing tool 8.

For example, in the example of FIG. 13, for the cleaning work 1132a, as the maintenance date and time 1131 of the most recent maintenance, "2018/11/28 20:11" is extracted. For the spindle running-in operation 1132f, as the maintenance date and time 1131 of the most recent maintenance, "2018/11/23 8:08" is extracted. Note that, among the maintenance dates and times 1131 extracted by the extraction processing controller 1220, the maintenance date and time 1131 of the most recent maintenance for each maintenance contents 1132 and for each device ID 1133 is stored in the display storage 1211.

Next, in Step S1103, the determination processing controller 1222 determines whether the elapsed time TM101 set in advance has elapsed since the maintenance date and time 1131 extracted by the extraction processing controller 1220. Herein, the determination processing controller 1222 determines, for each maintenance contents 1132 and for each maintenance date and time 1131 of most recent maintenance for each device ID 1133, whether the elapsed time TM101 has elapsed since the maintenance date and time 1131 of the most recent maintenance. The elapsed time TM101 set in advance is a time set for each maintenance contents 1132. The elapsed time TM101 is stored in the display storage 1211 in advance (see FIG. 9). The elapsed time TM101 is a time during which it is allowed not to perform maintenance in the corresponding maintenance contents 1132.

In Step S1103, when it is determined by the determination processing controller 1222 that the elapsed time TM101 set in advance has not elapsed since the maintenance date and time 1131 of the most recent maintenance, an alert is not notified. On the other hand, in Step S1103, when it is determined by the determination processing controller 1222 that the elapsed time TM101 set in advance has elapsed since the maintenance date and time 1131 of the most recent maintenance, it is determined that maintenance of the maintenance contents 1132 corresponding to the maintenance date and time 1131 of the most recent maintenance has not been performed for a while. In this case, next, in Step S1105, the alert notification controller 1224 notifies the user of an alert. There is no particular limitation on a method for notifying an alert. For example, the alert notification controller 1224 transmits an alert mail indicating that maintenance corresponding to the maintenance contents 1132 should be performed to a predetermined mail address. However, an alert may be notified, for example, by displaying an alert message on the display device 1201, and an alert may be notified by outputting sound or light.

As described above, in this modified example, as illustrated in FIG. 12, the maintenance information M101 corresponding to maintenance performed on the dental processing machine 100 is stored in the server 1120. When maintenance is performed on the dental processing machine 100, the maintenance information M101 is sequentially stored in the server 1120. Therefore, the maintenance information M101 is accumulated in the server 1120. In this modified example, based on the maintenance information M101 stored in the server 1120, as illustrated in FIG. 13, the maintenance information M101 is displayed on the display device 1201. The user can grasp when maintenance was performed on the dental processing machine 100 by viewing the maintenance information M101 displayed on the display device 1201.

In this modified example, a history of the maintenance information M101 when maintenance was performed for each of the plurality of dental processing machines 100 is stored in the server 1120. Thus, the history of the maintenance information M101 for the plurality of dental processing machines 100 can be displayed on the display device 1201, and therefore, the maintenance information M101 for the plurality of dental processing machines 100 can be collectively managed.

In this modified example, the display processing controller 1215 displays the maintenance information M101 for each dental processing machine 100. Thus, the user can check the maintenance information M101 for each dental processing machine 100. Therefore, which maintenance has been performed and which maintenance has not been performed can be grasped for each dental processing machine 100.

In this modified example, as illustrated in FIG. 12, the maintenance information M101 includes the maintenance contents 1132 and the maintenance date and time 1131 that is a date and time when maintenance corresponding to the maintenance contents 1132 was performed on the dental processing machine 100. The server 1120 is configured to store the maintenance contents 1132 and the maintenance date and time 1131 in association with each other. The display processing controller 1215 displays the maintenance contents 1132 and the maintenance date and time 1131 in association with each other on the display device 1201 (see FIG. 13), based on the maintenance information M101 acquired by the acquisition processing controller 1213. Thus, the user can grasp, for each maintenance contents 1132, the date and time 1131 when maintenance corresponding to the maintenance contents 1132 was performed by viewing the display device 1201. Accordingly, the date and time 1131 when maintenance was performed can be grasped for each maintenance contents 1132, and therefore, a plan for performing maintenance can be easily made.

In this modified example, as illustrated in FIG. 9, the display processing device 1210 includes the extraction processing controller 1220, the determination processing controller 1222, and the alert notification controller 1224. The extraction processing controller 1220 extracts the maintenance date and time 1131 corresponding to the maintenance contents 1132 of the most recent maintenance from the same maintenance contents 1132 in the maintenance information M101 acquired by the acquisition processing controller 1213. The determination processing controller 1222 determines whether the elapsed time TM101 set in advance has elapsed since the maintenance date and time 1131 extracted by the extraction processing controller 1220. When it is determined by the determination processing controller 1222 that the elapsed time TM101 set in advance has elapsed since the maintenance date and time 1131 extracted by the extraction processing controller 1220, the alert notification controller 1224 notifies an alert. Thus, for example, when maintenance corresponding to the maintenance contents 1132 has not been performed even after a lapse of the elapsed time TM101, an alert indicating that the maintenance corresponding to the maintenance contents 1132 has not been performed is notified. Accordingly, even when the user forgets to perform maintenance corresponding to the maintenance contents 1132, the user is reminded of the maintenance corresponding to the maintenance contents 1132 to be performed by receiving notification of the alert. Therefore, maintenance corresponding to the maintenance contents 1132 can be easily performed on a regular basis.

In this modified example, the elapsed time TM101 is set for each maintenance contents 1132. Depending on the maintenance contents 1132, a period in which it is allowed not to perform maintenance differs. Therefore, an alert can be notified at a proper time for each maintenance contents 1132 by setting the elapsed time TM101 for each maintenance contents 1132.

In this modified example, the alert notification controller 1224 sends a mail that notifies an alert to a mail address set in advance. Thus, the user receives a mail for notification of an alert, so that it is enable to prevent the user from forgetting maintenance corresponding to the maintenance contents 1132.

In this modified example, as illustrated in FIG. 10, the maintenance buttons BT107 that are pressed when maintenance is performed on the dental processing machine 100 are displayed on the terminal display device 1111. When one of the maintenance buttons BT107 including the buttons BT101 to BT106 is pressed via the terminal operation section 1112, the terminal acquirer 1116 acquires the maintenance information M101 corresponding to the maintenance button BT107. As described above, in this modified example, when the user performs maintenance on the dental processing machine 100, the user presses one of the buttons BT101 to BT106 which corresponds to the maintenance contents 1132 via the terminal operation section 1112. Then, a date and time when the one of the buttons TB101 to TB106 which corresponds to the maintenance contents 1132 was pressed is set as the maintenance date and time 1131, and thus, the maintenance date and time 1131 when maintenance was performed can be stored in the server 1120. As described above, a timing at which the user pressed the maintenance button BT107 is set as the maintenance date and time 1131, and thus, for example, even when the dental processing machine 100 cannot grasp the maintenance contents 1132, the maintenance date and time 1131 corresponding to the maintenance contents 1132 can be determined.

In this modified example, the maintenance contents 1132 include the processing tool replacement 1132c of replacing the processing tool 8. The processing tool 8 is used for processing the workpiece 5, is worn out when being used for a long time, and a consumable. Therefore, a timing of replacing the processing tool 8 can be easily known by viewing the display device 1201 to grasp the date and time 1131 when the processing tool 8 was replaced with a new processing tool 8 of the same type.

In this modified example, the maintenance contents 1132 include the spindle replacement 1132d in which the spindle 31 is replaced. The spindle 31 is a consumable and, when being used to some extent, becomes a possible cause for an error, such as insufficient rotation or the like. Therefore, a timing at which the spindle 31 is replaced next can be easily known by viewing the display device 1201 to grasp the date and time 1131 when the spindle 31 was replaced with a new spindle 31.

In this modified example, the maintenance contents 1132 include the cleaning work 1132a in which cleaning of the processing space 26 (see FIG. 3) of the dental processing machine 100 is performed. Processing powder generated during processing of the workpiece 5 by the processing tool 8 remains in the processing space 26. The cleaning work 1132a is work of removing, for example, the processing powder remaining in the processing space 26 by the user using a cleaning tool 1028 (see FIG. 11). When the processing powder in the processing space 26 is not removed on a regular basis, quality of an object produced by processing is degraded in some cases. Thus, a timing at which the cleaning work 1132a is performed next can be easily known by viewing the display device 1201 to grasp the date and time 1131 when the cleaning work 1132a was performed.

In this modified example, the maintenance contents 1132 include cleaning tool replacement 1132b in which the cleaning tool 1028 (see FIG. 11) that is used in cleaning the processing space 26 is replaced. The cleaning tool 1028 is, for example, a brush, and is a consumable. Therefore, the date and time 1131 when the cleaning tool 1028 was replaced with a new cleaning tool 1028 is grasped by viewing the display device 1201, and thus, a timing at which the cleaning tool 1028 is replaced next can be easily grasped.

In this modified example, the position of the origin determined in advance is set for the spindle 31. The maintenance contents 1132 include the spindle origin adjustment 1132e in which the position of the origin in the spindle 31 is adjusted. The spindle 31 is moved by the moving mechanism 33 (see FIG. 3), and a positional displacement is caused by using the spindle 31 for a long time in some cases. For the spindle 31, as described above, the position of the origin determined in advance is set, and occurrence of the position displacement of the spindle 31 can be suppressed by adjusting the position of the origin. The above described adjustment of the origin of the spindle 31 is preferably performed after the spindle 31 has been used to some extent in order to suppress the occurrence of the position displacement. Therefore, the date and time 1131 when the spindle origin adjustment 1132e was performed is grasped by viewing the display device 1201, and thus, a timing at which the spindle origin adjustment 1132e is performed next can be easily known.

In this modified example, the maintenance contents 1132 include the spindle running-in operation 1132f of causing the spindle 31 to rotate before processing by the dental processing machine 100. For example, when the dental processing machine 100 is used after having not been used for a long time, an error occurs due to insufficient rotation of the spindle 31 in some cases. Therefore, after a certain time has elapsed, the spindle running-in operation 1132f for the spindle 31 is preferably performed. Therefore, the date and time 1131 when the spindle running-in operation 1132f was performed is grasped by viewing the display device 1201, and thus, a timing at which the spindle running-in operation 1132f is performed next can be easily known.

In this modified example, the maintenance history display device 1200 is connected to the plurality of dental processing machines 100 via the server 1120. Among companies that introduce the maintenance history display system 1001, some have a plurality of business bases in different locations. In this case, there is a probability that one or more dental processing machines 100 are introduced in each of the business bases. Therefore, the maintenance history display device 1200 may be configured to display a maintenance history of each of the one or more dental processing machines 100 for each business base.

### <Second Modified Example>

Next, a second modified example will be described. The second modified example relates to an error history display system 2001 for a dental processing machine.

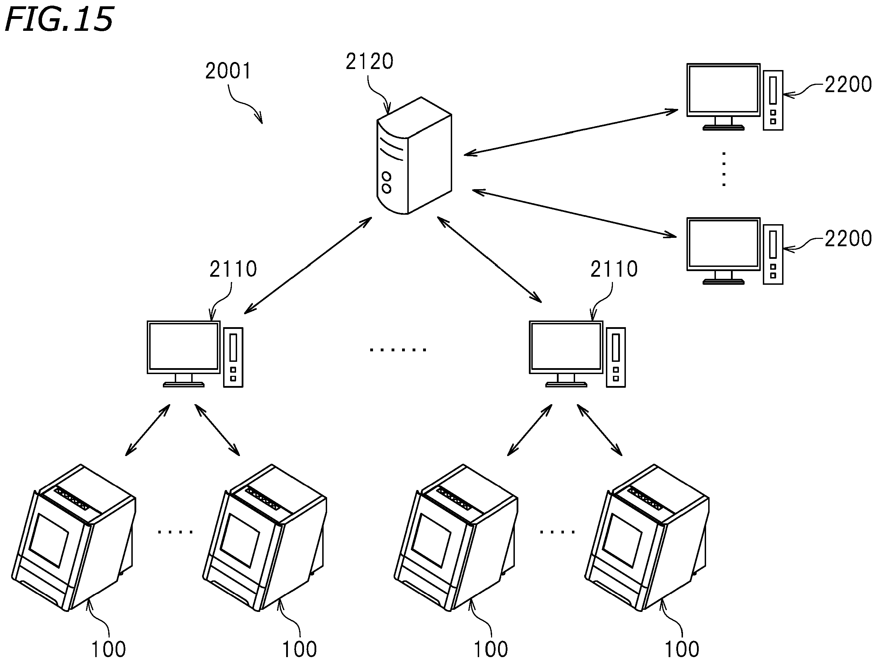

FIG. 15 is a conceptual view of the error history display system 2001 according to the second modified example. The error history display system 2001 collectively manages a history of errors that occurred in a plurality of dental processing machines 100. First, an outline of the error history display system 2001 will be described.

As illustrated in FIG. 15, the error history display system 2001 includes a dental processing machine 100, an operation terminal 2110, a server 2120, and an error history display device 2200. There is no particular limitation on the number of the dental processing machines 100 according to this modified example. The number of the dental processing machines 100 may be one or more. The operation terminal 2110 is used to operate the dental processing machine 100 by a user. One or more dental processing machines 100 are communicably connected to the operation terminal 2110. Note that there is no particular limitation on the number of the operation terminals 2110 according to this modified example. The number of the operation terminals 2110 may be one or more. The server 2120 collectively manages information for the plurality of dental processing machines 100. The plurality of dental processing machines 100 is connected to the server 2120. In this modified example, the plurality of operation terminals 2110 is communicably connected to the server 2120 and the plurality of dental processing machines 100 is connected to the server 2120 via the operation terminals 2110.

The error history display device 2200 manages and displays a history of errors that occurred in the dental processing machine 100. Herein, the error history display device 2200 is communicably connected to the server 2120.
Note that there is no particular limitation on the number of the error history display devices 2200. The number of error history display devices 2200 may be one or more. Note that, in this modified example, the error history display system 2001 may be realized by a client-server type system and may be realized by cloud computing. The dental processing machine 100, the operation terminal 2110, the server 2120, and the error history display device 2200 will be described in detail below.

In this modified example, the dental processing machine 100 has the same configuration as that of the dental processing machine 100 of the above described embodiment, except the configuration of the controller 60. Therefore, herein, description of the dental processing machine 100 will be omitted as appropriate and only a configuration of a controller 2060 will be described later.

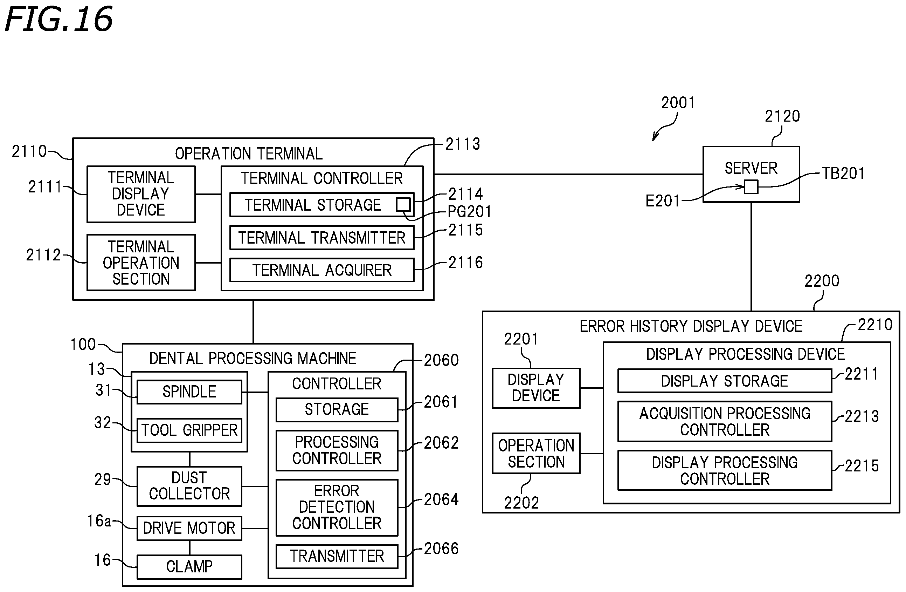

FIG. 16 is a block diagram of the error history display system 2001. As illustrated in FIG. 16, the dental processing machine 100 includes the controller 2060. The controller 2060 controls processing of the workpiece 5 (see FIG. 4). The controller 2060 is formed of a microcomputer and is provided inside the man body 11 (see FIG. 2). The controller 2060 includes, for example, a central processing unit (CPU), a ROM that stores a program or the like which is executed by the CPU, a RAM, or the like. Herein, control of processing of the workpiece 5 is performed using the program stored in the microcomputer.

The controller 2060 is communicably connected to the spindle 31 and controls rotation of the spindle 31. The controller 2060 is communicably connected to the drive motor 16a that rotates the clamp 16 around the Y axis (θy) and controls the drive motor 16a. The controller 2060 is communicably connected to the dust collector 29 and controls driving of the dust collector 29. Although not illustrated, the controller 2060 is communicably connected to the moving mechanism 33 (see FIG. 3) that moves the processing mechanism 13 in the left-right direction and the up-down direction and controls the moving mechanism 33.

In this modified example, the controller 2060 includes a storage 2061, a processing controller 2062, an error detection controller 2064, and a transmitter 2066. Each element of the controller 2060 may be configured by a software and may be configured by a hardware. Each element of the controller 2060 may be realized by one or more processors and may be incorporated in a circuit.

The dental processing machine 100 according to this modified example automatically processes the workpiece 5 using the one or more processing tools 8, based on the processing program PG201, thereby producing one or more desired objects. The dental processing machine 100 processes the workpiece 5, based on the processing program PG201. The processing program PG201 is the same as the processing program PG1 (see FIG. 5) of the above described embodiment. That is, the processing program PG201 is so-called NC data (NC program) or job data (job program). The processing program PG201 indicates by what kind of procedure the dental processing machine 100 processes the workpiece 5. In the processing program PG201, a plurality of commands in which an operation of the processing mechanism 13 and an operation of the clamp 16 that supports the workpiece 5 are defined by coordinate values is recorded.

The processing program PG201 is created, for example, by a CAM device (not illustrated). The CAM device creates the processing program PG201, based on data (which will be hereinafter also referred to as object data) for a shape or shapes of one or more objects that are produced by processing the workpiece 5. The processing program PG201 created by the CAM device is transmitted to the dental processing machine 100, for example, at a start of processing. The dental processing machine 100 then sequentially executes a command of the received processing program PG201 to produce one or more objects from the workpiece 5.

In this modified example, similar to the processing controller 62 (see FIG. 5) of the above described embodiment, the processing controller 2062 is configured to process the workpiece 5 by executing the processing program PG201. The processing controller 2062 controls the processing mechanism 13 and the clamp 16 to process the workpiece 5, based on the processing program PG201. In this modified example, the processing controller 2062 controls operations of the processing mechanism 13 and the clamp 16, based on coordinate values indicated in the commands of the processing program PG201. The processing controller 2062 integrally controls the operation of the clamp 16 with the operation of the processing mechanism 13 as a whole. Thus, a relative positional relationship between the workpiece 5 supported by the clamp 16 and the processing tool 8 is changed in a three-dimensional manner, and thus, highly accurate processing by five-axis control of the X-axis direction, the Y-axis direction, the Z-axis direction, the rotation direction around the X axis (θx), and the rotation direction around the Y axis direction (θy) can be realized. In this modified example, processing on the workpiece 5 can be performed by causing the edge tool 8a (see FIG. 3) of the processing tool 8 rotated by the spindle 31 of the processing mechanism 13 to abut on the workpiece 5 supported by the clamp 16. Herein, the processing tool 8 is caused to abut on the workpiece 5 in an arbitrary position at an arbitrary angle, thereby producing an object.

The error detection controller 2064 detects an error of the dental processing machine 100 which occurred during processing of the workpiece 5. There is no particular limitation on contents of the error. The errors occur when the workpiece 5 cannot be properly processed. Examples of the errors include, for example, an error (which will be hereinafter referred to as a tool breaking error) caused when the processing tool 8 is broken, an error caused when the tool gripper 32 cannot grip the processing tool 8, an error caused when the spindle 31 cannot be rotated at proper rotation speed, and an error caused when the processing mechanism 13 or the clamp 16 cannot be moved to a proper position, or the like. Examples of the errors also include an error caused when the dust collector 29 is not in operation. The error detection controller 2064 detects the above described errors via a sensor or the like.

As an example of control of error detection by the error detection controller 2064, control of detection of the above described tool breaking error will be briefly described below. In this modified example, "a determination length" that is a length set for each of the plurality of processing tools 8 (in other words, a length of each of the processing tools 8 in an axial direction) is stored in the storage 2061. During processing, before and after use of the processing tool 8, that is, after the processing tool 8 is picked up from the corresponding tool magazine 14 and before the processing tool 8 is stored in the corresponding tool magazine 14, the error detection controller 2064 detects whether a tool breaking error occurred. Herein, the error detection controller 2064 controls movement of the processing mechanism 13 such that a lower edge of the processing tool 8 is brought into contact with the switch 36a (see FIG. 4) of the tool sensor 36 in a state in which the processing tool 8 is gripped by the tool gripper 32. The error detection controller 2064 then calculates an actual length of the processing tool 8, based on a position of the tool gripper 32 or the spindle 31 in the up-down direction when the processing tool 8 is brought into contact with the switch 36a.

The error detection controller 2064 then compares the determination length of the processing tool 8 stored in the storage 2061 and the actual length of the processing tool 8 with each other. When the actual length of the processing tool 8 is shorter than the determination length of the processing tool 8, the error detection controller 2064 determines that a tool breaking error occurred and detects the error.

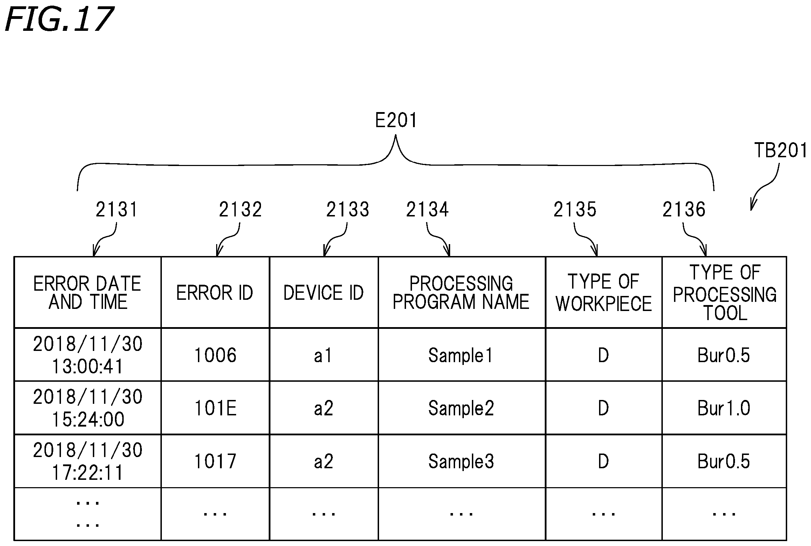

When an error occurs in the dental processing machine 100, the transmitter 2066 transmits error information E201 (see FIG. 17) for the error to the operation terminal 2110. Herein, when an error is detected by the error detection controller 2064, the transmitter 2066 transmits the error information E201 for the detected error to the operation terminal 2110.

Next, the operation terminal 2110 illustrated in FIG. 8 will be described. In this modified example, the plurality of operation terminals 2110 has the same configuration. Therefore, a configuration of one of the operation terminals 2110 will be described below. Similar to the operation terminal 110 (see FIG. 1) of the above described embodiment, the operation terminal 2110 is used to operate the dental processing machine 100. The operation terminal 2110 is realized, for example, by a personal computer. The operation terminal 2110 may be realized by a general-purpose computer and may be realized by a dedicated computer.

As illustrated in FIG. 15, one or more dental processing machines 100 are communicably connected to the operation terminal 2110. The operation terminal 2110 can operate the one or more dental processing machines 100 communicably connected thereto. As illustrated in FIG. 16, the operation terminal 2110 includes, for example, a terminal display device 2111, a terminal operation section 2112, and a terminal controller 2113. The terminal display device 2111 is, for example, a display of a desktop-type or notebook-type personal computer. The terminal operation section 2112 is, for example, a keyboard or a mouse of the personal computer. However, the terminal operation section 2112 may be a touch panel provided on the terminal display device 2111.

The terminal controller 2113 is, for example, a microcomputer. There is no particular limitation on a configuration of a hardware of the microcomputer. For example, the microcomputer includes a CPU, a ROM, a RAM, a storage, or the like. The terminal controller 2113 is communicably connected to the terminal display device 2111 and the terminal operation section 2112.

A dedicated application used for operating the dental processing machine 100 is installed in the terminal controller 2113. The user displays the application on the terminal display device 2111, operates the application via the terminal operation section 2112, and thus, can operate the dental processing machine 100. The terminal controller 2113 includes a terminal storage 2114, a terminal transmitter 2115, and a terminal acquirer 2116.

The above described processing program PG201 is stored in the terminal storage 2114. For example, when the dental processing machine 100 is caused to process the workpiece 5, the terminal transmitter 2115 transmits the processing program PG201 to the controller 2060 of the dental processing machine 100. The processing controller 2062 of the dental processing machine 100 processes the workpiece 5 by executing the processing program PG201 received by the controller 2060, and thus, a desired object is produced. The terminal acquirer 2116 receives information for processing from the controller 2060 of the dental processing machine 100. Herein, the information for processing includes, for example, a portion of the error information E201 (see FIG. 17). The information for processing which includes the portion of the error information E201 received by the terminal acquirer 2116 is stored in the terminal storage 2114.

Next, the server 2120 illustrated in FIG. 15 will be described. One or more operation terminals 2110 are communicably connected to the server 2120, and one or more dental processing machines 100 are communicably connected to the server 2120 via the one or more operation terminals 2110. For example, when the error history display system 2001 is realized by cloud computing, the server 2120 is a cloud. The server 2120 is an example of the storage.

As illustrated in FIG. 16, an error history table TB201 is stored in the server 2120. FIG. 17 is a table illustrating an example of the error history table TB201. The error history table TB201 is used to manage a history of the error information E201 for errors that occurred in each of the one or more dental processing machines 100. The error history table TB201 is used to collectively manage the history of the error information E201 for errors that occurred in each of the one or more dental processing machines 100. In this modified example, in the error history table TB201, the error information E201 is managed for each processing program PG201 that was being executed when the error occurred.

Note that there is no particular limitation on a configuration of the error history table TB201. For example, the error information E201 is stored in the error history table TB201. The error information E201 includes an error date and time 2131, an error ID 2132, a device ID 2133, a file name 2134 (which will be hereinafter referred to as a processing program name 2134) of the processing program PG201, a type 2135 of the workpiece 5, and a type 2136 of the processing tool 8. In the error history table TB201, the error date and time 2131, the error ID 2132, the device ID 2133, the processing program name 2134, the type 2135 of the workpiece 5, and the type 2136 of the processing tool 8 are associated. In other words, in the error history table TB201, there are items, such as the error date and time 2131, the error ID 2132, the device ID 2133, the processing program name 2134, the type 2135 of the workpiece 5, the type 2136 of the processing tool 8, or the like. As used herein the term "associated" means items being described in the same row in the table.

The error date and time 2131 is a date and time when an error occurred in the dental processing machine 100. Specifically, the error date and time 2131 is a date and time when the error detection controller 2064 of the dental processing machine 100 detected an error. However, the error date and time 2131 may be a date and time when the operation terminal 2110 received the error information E201 (specifically, the error ID 2132) from the dental processing machine 100. The error ID 2132 uniquely specifies contents of an error. The error ID 2132 is a specific ID given to each error contents. What kind of error occurred can be known from the error ID 2132. Although not specifically illustrated, a list of the error ID 2132 is stored in the storage 2061 of the dental processing machine 100. When the error detection controller 2064 detects an error, the transmitter 2066 transmits the error ID 2132 corresponding to the error detected by the error detection controller 2064 to the operation terminal 2110 with reference to the list of the error ID 2132. The device ID 2133 is a specific ID given to each dental processing machine 100. The dental processing machine 100 can be uniquely specified by the device ID 2133.

The processing program name 2134 is, for example, a file name of a file in which the processing program PG201 is stored. The processing program PG201 can be specified by the processing program name 2134. The type 2135 of the workpiece 5 is a type of the workpiece 5 that was being processed by the dental processing machine 100 when an error occurred. In other words, the type 2135 of the workpiece 5 is the type of the workpiece 5 that was being processed by the dental processing machine 100 when the error was detected by the error detection controller 2064. The type 2135 of the workpiece 5 is the type of the workpiece 5 that was supported by the clamp 16 (see FIG. 4) of the dental processing machine 100 when an error occurred. In other words, the type 2135 of the workpiece 5 is the type of the workpiece 5 designated by the processing program PG201 that was being executed by the dental processing machine 100 when the error occurred.

The type 2136 of the processing tool 8 is a type of the processing tool 8 that was processing the workpiece 5 when an error occurred. In other words, the type 2136 of the processing tool 8 is the type of the processing tool 8 that was processing the workpiece 5 when the error was detected by the error detection controller 2064. The type 2136 of the processing tool 8 is the type of the processing tool 8 that was gripped by the tool gripper 32 of the dental processing machine 100 when the error occurred. In other words, the type 2136 of the processing tool 8 is the type of the processing tool 8 designated by the processing program PG201 that was being executed by the dental processing machine 100 when the error occurred.

In this modified example, in the error history table TB201, data of each item of the error information E201 is added in accordance with steps described below. For example, when the error detection controller 2064 of the dental processing machine 100 detects an error, the transmitter 2066 of the dental processing machine 100 transmits the error ID 2132 to the operation terminal 2110. The terminal acquirer 2116 of the operation terminal 2110 receives the error ID 2132 sent from the dental processing machine 100. At this time, in the operation terminal 2110, the device ID 2133 of the dental processing machine 100 from which the error ID 2132 was transmitted and a date and time when the error ID 2132 was received can be acquired. Therefore, the operation terminal 2110 sets, as the error date and time 2131, the date and time when the error ID 2132 was received, and associates the error date and time 2131, the error ID 2132, and the device ID 2133 of the dental processing machine 100 from which the error ID 2132 was transmitted.

In this modified example, the processing program PG201 executed by the processing controller 2062 of the dental processing machine 100 is stored in the terminal storage 2114 of the operation terminal 2110. The operation terminal 2110 can acquire the processing program name 2134 of the processing program PG201 that was being executed by the processing controller 2062 of the dental processing machine 100 in which an error occurred from the terminal storage 2114. Furthermore, in this modified example, in the processing program PG201, information for the type 2135 of the workpiece 5 that is a subject of processing and information for the type 2136 of the processing tool 8 that is used for processing are indicated. In other words, the type 2135 of the workpiece 5 that was being processed by the processing controller 2062 and the type 2136 of the processing tool 8 are stored in the terminal storage 2114. Therefore, the operation terminal 2110 can acquire the type 2135 of the workpiece 5 that was being processed when the error occurred and the type 2136 of the processing tool 8 that was used by the dental processing machine 100 when the error occurred from the processing program PG201 stored in the terminal storage 2114. The operation terminal 2110 associates the processing program name 2134, the type 2135 of the workpiece 5, and the type 2136 of the processing tool 8 that have been acquired from the processing program PG201 stored in the terminal storage 2114 with the error date and time 2131, the error ID 2132, and the device ID 2133.

The terminal transmitter 2115 of the operation terminal 2110 associates the error date and time 2131, the error ID 2132, the device ID 2133, the processing program name 2134, the type 2135 of the workpiece 5, and the type 2136 of the processing tool 8 and transmits the error information E201 to the server 2120. The server 2120 then adds the received error information E201, that is, the error date and time 2131, the error ID 2132, the device ID 2133, the processing program name 2134, the type 2135 of the workpiece 5, and the type 2136 of the processing tool 8 in association with each other, to the error history table TB201. As described above, when an error occurs in the dental processing machine 100, the error information E201 is sequentially added to the error history table TB201.

Note that the error history table TB201 may be formed of one table and may be formed of a plurality of tables. The error history table TB201 may be stored in the terminal storage 2114 of the operation terminal 2110, in addition to server 2120.

Next, the error history display device 2200 illustrated in FIG. 15 will be described. The error history display device 2200 manages and displays a history of the error information E201 of the plurality of dental processing machines 100. Similar to the operation terminal 2110, the error history display device 2200 is realized, for example, by a personal computer. The error history display device 2200 may be realized by a general-purpose computer and may be realized by a dedicated computer.

As illustrated in FIG. 15, the error history display device 2200 is communicably connected to the server 2120. The error history display device 2200 acquires the error information E201 from the error history table TB201 stored in the server 2120 and displays, based on the acquired error information E201, a history of the error information E201 of each dental processing machine 100. As illustrated in FIG. 16, the error history display device 2200 includes a display device 2201, an operation section 2202, and a display processing device 2210.

There is no particular limitation on a type of the display device 2201. The display device 2201 is, for example, a display of a mobile terminal. However, the display device 2201 may be, for example, a display of a desktop-type or notebook-type personal computer.

The operation section 2202 is operated by the user. For example, the user can switch display on the display device 2201 by operating the operation section 2202. Note that there is no particular limitation on the type of the operation section 2202. For example, the operation section 2202 is a touch panel provided on the display device 2201. However, the operation section 2202 may be a keyboard or a mouse of the personal computer.

The display processing device 2210 acquires the error history table TB201 in which the error information E201 is stored from server 2120 and displays the error information E201 on the display device 2201. Note that there is no particular limitation on a configuration of the display processing device 2210. The display processing device 2210 is a so-called controller. The display processing device 2210 is, for example, a microcomputer. The display processing device 2210 includes a CPU, a ROM, a RAM, a storage, or the like.
In this modified example, the display processing device 2210 is a separate device from the server 2120. However, the display processing device 2210 may be integrally formed with the server 2120. The display processing device 2210 is communicably connected to the server 2120 via a wired communication or a wireless communication.

In this modified example, the display processing device 2210 includes a display storage 2211, an acquisition processing controller 2213, and a display processing controller 2215. Each element of the display processing device 2210 may be configured by a software and may be configured by a hardware. Each element of the display processing device 2210 may be realized by one or more processors and may be incorporated in a circuit.

The acquisition processing controller 2213 acquires the error history table TB201 stored in the server 2120, thereby acquiring the error information E201. Note that the error information E201 in the error history table TB201 acquired by the acquisition processing controller 2213 may be stored in the display storage 2211.

The display processing controller 2215 displays the error information E201 acquired by the acquisition processing controller 2213 on the display device 2201. Note that there is no particular limitation on how the error information E201 is displayed on the display device 2201. The error information E201 is displayed on the display device 2201, for example, using a table, a graph, or the like.

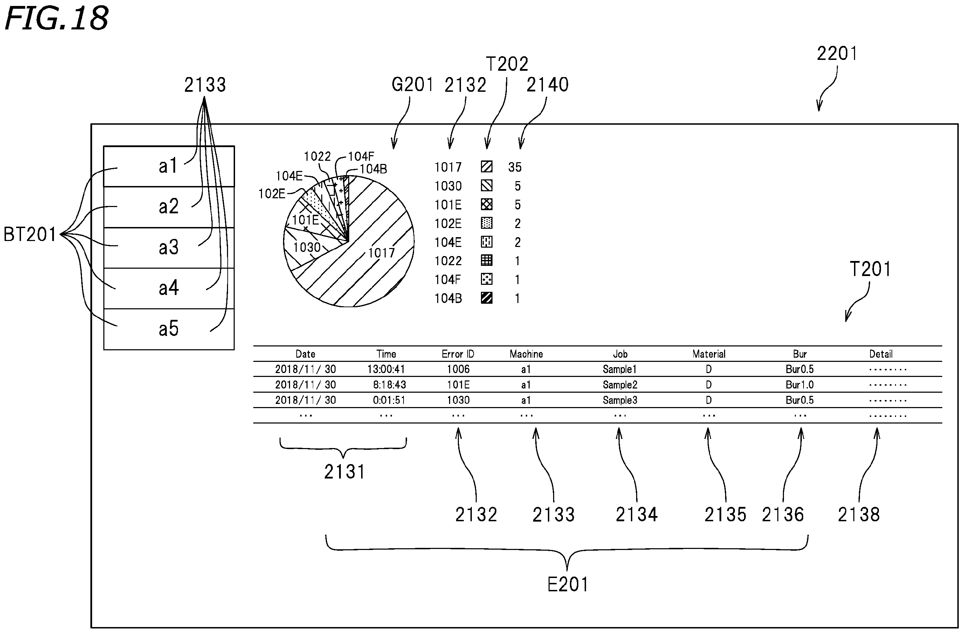

FIG. 18 is a view illustrating an example of the display device 2201. As illustrated in FIG. 18, the display processing controller 2215 displays the error information E201 for each dental processing machine 100. In this modified example, the display processing controller 2215 displays an error history list table T201 for each dental processing machine 100 on the display device 2201. The error history list table T201 is created based on the error information E201 of the error history table TB201 acquired by the acquisition processing controller 2213.

In this modified example, a plurality of selection buttons BT201 is arranged on the display device 2201. The selection buttons BT201 are provided for each dental processing machine 100, and one selection button BT201 corresponds to one dental processing machine 100. The user selects and presses one of the selection buttons BT201 via the operation section 2202, and thus, the error history list table T201 for the dental processing machine 100 corresponding to the selection button BT201 selected by the user is displayed. Note that, in FIG. 18, for convenience of description, the device ID 2133 is given to each of the selection buttons BT201. Herein, the five selection buttons BT201 correspond to the dental processing machines 100 the respective device IDs 2133 of which are a1, a2, a3, a4, and a5, and the respective error history list tables T201 of the five dental processing machines 100 can be displayed on the display device 2201.

Note that there is no particular limitation on a configuration of the error history list table T201. In this modified example, the error history list table T201 is a table related to the error information E201 of an error that occurred in the dental processing machine 100 corresponding to the device ID 2133 selected via the selection button BT201. In the error history list table T201, the error date and time 2131 when an error occurred, the error ID 2132, the device ID 2133, the processing program name 2134, the type 2135 of the workpiece 5, and the type 2136 of the processing tool 8 are displayed. Herein, data in one row in the error history list table T201 is the error information E201 in one processing program PG201. In this modified example, detailed information 2138 is displayed in the error history list table T201. The detailed information 2138 is information for error contents indicated by the error ID 2132, and indicates what kind of error actually occurred. The detailed information 2138 is associated with the error ID 2132 and is stored in the display storage 2211 in advance.

The error history list table T201 is created and displayed by the display processing controller 2215, for example, in accordance with steps described below. Herein, steps for creating the error history list table T201 corresponding to the dental processing machine 100 the device ID 2133 of which is a1 will be briefly described. First, the display processing controller 2215 extracts data of a row in which the device ID 2133 is a1 from the error history table TB201 acquired by the acquisition processing controller 2213. That is, the display processing controller 2215 extracts the error date and time 2131, the error ID 2132, the processing program name 2134, the type 2135 of the workpiece 5, and the type 2136 of the processing tool 8 that correspond to the row in which the device ID 2133 is a1.

Next, the display processing controller 2215 displays the error date and time 2131, the error ID 2132, the device ID 2133, the processing program name 2134, the type 2135 of the workpiece 5, and the type 2136 of the processing tool 8 that have been extracted from the error history table TB201 in association with each other in the error history list table T201. Thus, the error information E201 of an error that occurred in the dental processing machine 100 the device ID 2133 of which is a1 can be displayed on the display device 2201 using the error history list table T201.

In this modified example, the display processing controller 2215 displays, in addition to the error history list table T201, a pie graph G201 indicating a ratio of the number of error occurrences and an error occurrence count table T202 on the display device 2201. The pie graph G201 operates in linkage with the error history list table T201, sums up the number of error occurrences 2140 for each error ID 2132 in the error information E201 indicated in the error history list table T201, and indicates a ratio of the number of error occurrences 2140 for each error ID 2132 to the total number of errors that occurred in one dental processing machine 100. In other words, the pie graph G201 indicates the ratio of the number of error occurrences 2140 for each error ID 2132 to the total number of errors that occurred in the dental processing machine 100 the device ID 2133 of which was selected via the selection button BT201. The error occurrence count table T202 corresponds to the pie graph G201 and indicates results of summing up of the number of error occurrences 2140 for each error ID 2132 in the error information E201 indicated in the error history list table T201. In other words, the error occurrence count table T202 indicates the number of error occurrences 2140 for each error ID 2132 of an error that occurred in the dental processing machine 100 the device ID 2133 of which was selected via the selection button BT201.

In this modified example, as illustrated in FIG. 16, the error information E201 transmitted from the operation terminal 2110 is stored in the server 2120. When an error occurs in the dental processing machine 100, the error information E201 is sequentially stored in the server 2120. The error information E201 is displayed on the display device 2201, as illustrated in FIG. 18, based on the error information E201 stored in the server 2120 in the above described manner. The user can grasp what kind of error occurred in the dental processing machine 100 and when the error occurred by viewing the error information E201 displayed on the display device 2201.

In this modified example, a history of the error information E201 for errors that occurred in the plurality of dental processing machines 100 is stored in the server 2120. Thus, the error information E201 for errors in the plurality of dental processing machines 100 can be displayed on the display device 2201. Therefore, the error information E201 for errors in the plurality of dental processing machines 100 can be collectively managed.

In this modified example, the display processing controller 2215 displays the error information E201 for each dental processing machine 100. Thus, the user can check the error information E201 for each dental processing machine 100. Therefore, the user can grasp what kind of error occurred and when the error occurred for each dental processing machine 100.

In this modified example, as illustrated in FIG. 17, the error information E201 includes the error ID 2132 that identifies error contents. What kind of error occurred in the dental processing machine 100 can be identified by the error ID 2132. Accordingly, what kind of error occurred and how often the error occurred can be easily grasped.

In this modified example, when an error occurs, the transmitter 2066 of the dental processing machine 100 transmits the error ID 2132 to the operation terminal 2110. As described above, the error ID 2132 is transmitted from the dental processing machine 100 in which the error actually occurred, and therefore, accurate information can be obtained. Therefore, what kind of error occurred in the dental processing machine 100 can be accurately grasped.

In this modified example, the error information E201 incudes the specific device ID 2133 given to the dental processing machine 100. The terminal transmitter 2115 of the operation terminal 2110 transmits the error ID 2132 transmitted by the transmitter 2066 of the dental processing machine 100 and the device ID 2133 of the dental processing machine 100 in which the error occurred to the server 2120. The server 2120 is configured to store the error ID 2132 and the device ID 2133 transmitted by the terminal transmitter 2115 in association with each other. As illustrated in FIG. 18, the display processing controller 2215 displays the error ID 2132 and the device ID 2133 stored in the server 2120 in association with each other on the display device 2201. Thus, in which dental processing machine 100 the error corresponding to the error ID 2132 occurred can be specified by the device ID 2133. Therefore, the error ID 2132 of an error that frequently occurs can be easily grasped for each dental processing machine 100.

In this modified example, the dental processing machine 100 includes the processing controller 2062 that processes the workpiece 5 by executing the processing program PG201. The operation terminal 110 includes the terminal storage 2114 in which the processing program name 2134 of the processing program PG201 executed by the processing controller 2062 is stored. The terminal transmitter 2115 transmits the error ID 2132 transmitted by the transmitter 2066 of the dental processing machine 100 and the processing program name 2134 of the processing program PG201 that was being executed by the processing controller 2062 when the error occurred to the server 2120. The server 2120 is configured to store the error ID 2132 and the processing program name 2134 transmitted by the terminal transmitter 2115 in association with each other. The display processing controller 2215 displays the error ID 2132 and the processing program name 2134 stored in the server 2120 on the display device 2201 in association with each other. Thus, which processing program PG201 was being executed when the error corresponding to the error ID 2132 occurred can be specified by the processing program name 2134. Accordingly, for each processing program PG201, what kind of error occurred can be easily grasped.

The type 2135 of the workpiece 5 processed by the processing controller 2062 is stored in the terminal storage 2114. The terminal transmitter 2115 transmits the error ID 2132 transmitted by the transmitter 2066 of the dental processing machine 100 and the type 2135 of the workpiece 5 which was being processed by the processing controller 2062 when the error occurred to the server 2120. The server 2120 is configured to store the error ID 2132 and the type 2135 of the workpiece 5 transmitted by the terminal transmitter 2115 in association with each other. The display processing controller 2215 displays the error ID 2132 and the type 2135 of the workpiece 5 stored in the server 2120 on the display device 2201 in association with each other. Thus, what kind of type 2135 of the workpiece 5 was being processed by the dental processing machine 100 when the error corresponding to the error ID 2132 occurred can be easily grasped. Accordingly, what kind of error occurred can be easily grasped for each type 2135 of the workpiece 5.

In this modified example, the type 2136 of the processing tool 8 gripped by the tool gripper 32 during processing of the dental processing machine 100 is stored in the terminal storage 2114. The terminal transmitter 2115 transmits the error ID 2132 transmitted by the transmitter 2066 of the dental processing machine 100 and the type 2136 of the processing tool 8 that was gripped by the tool gripper 32 of the dental processing machine 100 when the error occurred to the server 2120. The server 2120 is configured to store the error ID 2132 and the type 2136 of the processing tool 8 transmitted by the terminal transmitter 2115 in association with each other. The display processing controller 2215 displays the error ID 2132 and the type 2136 of the processing tool 8 stored in the server 2120 on the display device 2201 in association with each other. Thus, what kind of type 2136 of the processing tool 8 was used by the dental processing machine 100 when the error corresponding to the error ID 2132 occurred can be easily grasped. Accordingly, what kind of error occurred can be easily grasped for each type 2136 of the processing tool 8.

In this modified example, the error history list table T201 is a table related to the error information E201 for each dental processing machine 100, and the error information E201 for each dental processing machine 100 is displayed on the display device 2201. However, the error history list table T201 may be, for example, a table of the error information E201 for a plurality of dental processing machines 100 selected by the user, and may be a table of the error information E201 for the corresponding dental processing machine 100 to a period selected by the user. That is, a period or the number of the dental processing machines 100 indicated in the error history list table T201 are set as appropriate by the user.

## Claims

1. A status display system (1) comprising:
a status display device (200);
a plurality of dental processing machines (100);
an operation terminal (110) communicably connected to the plurality of dental processing machines (100), and the status display device (200); and
a storage (120) communicably connected to the status display device (200) and the operation terminal (110), wherein
the status display device (200) includes
a status acquirer (213) configured to acquire a processing status (S1) of each of the plurality of dental processing machines (100);
a status creation controller (215) configured to create a status list (SL1) indicating the processing status (S1) of each of the plurality of dental processing machines (100) acquired by the status acquirer (213); and
a display processing controller (251) configured to display the status list (SL1) created by the status creation controller (215);
**characterized by**:
an imaging device (105) configured to capture an image (M1) of a processing space (26) of each of the plurality of dental processing machines (100); and in that
the status display device (200) includes
an image acquirer (225) configured to acquire the image (M1) of the processing space (26) in which a workpiece (5) is processed in one dental processing machine (100) selected from the plurality of dental processing machines (100) by a user, the image (M1) being captured by the imaging device (105); and
an image acquisition instruction controller (223) configured to instruct the operation terminal (110) to acquire the image (M1) of the one dental processing machine (100) selected from the plurality of dental processing machines (100) by the user;
the display processing controller (251) is configured to display the image (M1) acquired by the image acquirer (225) on a display device (201);
the operation terminal (110) is communicably connected to the imaging device (105),
and includes
a terminal image acquirer (116) configured to acquire the image (M1) instructed by the image acquisition instruction controller (223) to be acquired from the imaging device (105), and
a terminal transmitter (119) configured to transmit the image (M1) acquired by the terminal image acquirer (116) to the storage (120), and
the image acquirer (225) is configured to acquire the image (M1) from the storage (120).

2. The status display system (1) according to claim 1,
wherein the processing status (S1) includes at least an operation state (S11), a non-operation state (S12), and an error state (S13).

3. The status display system (1) according to claim 1 or 2, the status display device (200) further comprising:
a list acquirer (235) configured to acquire a processing program list (PL1) of processing programs (PG1) that are executed by the one dental processing machine (100) selected from the plurality of dental processing machines (100) by the user,
wherein the display processing controller (251) displays the processing program list (PL1) acquired by the list acquirer (235).

4. The status display system (1) according to claim 3,
wherein the display processing controller (251) displays, with the processing program list (PL1), information (103) on whether execution of the processing programs (PG1) of the processing program list (PL1) has ended.

5. The status display system (1) according to any one of claims 1 to 4, the status display device (200) further comprising:
an internal information acquirer (245) configured to acquire internal information (SR1) set for the one dental processing machine (100) selected from the plurality of dental processing machines (100) by the user,
wherein the display processing controller (251) displays the internal information (SR1) acquired by the internal information acquirer (245),
wherein the dental processing machine (100) includes
a tool gripper (32) configured to grip a processing tool (8),
a spindle (31) configured to rotate the tool gripper (32), and
a moving mechanism (33) configured to move the spindle (31), and
the dental processing machine (100) is configured to process a workpiece (5),
a position of an origin determined in advance is set for the spindle (31), and
the internal information (SR1) includes at least one of
a firmware version (SR11) of a firmware incorporated in the dental processing machine (100),
operation information (SR12) of the dental processing machine (100),
a correction value (SR13) used for adjusting the position of the origin of the spindle (31),
a type (SR14) of the processing tool (8),
a type (SR15) of the workpiece (5), and
error information (SR16) of the dental processing machine (100).

6. The status display system (1) according to any one of claims 1 to 5,
wherein, in the status list (SL1), the processing status (S1), a device ID (101) given to the dental processing machine (100), a name (102a) of the dental processing machine (100), a machine model name (102b) of the dental processing machine (100), and a machine number (102c) of the dental processing machine (100) are associated.

7. The status display system (1) according to any one of claims 1 to 6, further comprising:
an operation section (202) that is operated by the user,
wherein the display processing controller (251) displays at least the status list (SL1) created by the status creation controller (215) and the image (M1) acquired by the image acquirer (225) on the display device (201).

8. The status display system (1) according to claim 7,
wherein the status list (SL1) displayed on the display device (201) is configured such that the one dental processing machine (100) can be selected via the operation section (202) from the plurality of dental processing machines (100) indicated in the status list (SL1), and
the image acquirer (225) acquires the image (M1) for the one dental processing machine (100) selected from the plurality of dental processing machines (100) indicated in the status list (SL1) by the user via the operation section (202).

9. The status display system (1) according to claim 7 or 8,
wherein the display processing controller (251) displays at least the status list (SL1) created by the status creation controller (215) and the image (M1) acquired by the image acquirer (225) on a same screen.

10. The status display system (1) according to any one of claims 7 to 9,
wherein a status update button (BT1) that is used to update the status list (SL1) displayed on the display device (201) and an image update button (BT2) that is used to update the image (M1) displayed on the display device (201) are displayed on the display device (201),
when the status update button (BT1) is pressed via the operation section (202), the status acquirer (213) acquires information of the processing status (S1) for each of the plurality of dental processing machines (100), and
when the image update button (BT2) is pressed via the operation section (202), the image acquirer (225) acquires the image (M1) of the one dental processing machine (100) selected by the user.

11. A method for displaying a status of a dental processing machine utilizing the status display system of any preceding claim, comprising the steps of:
acquiring a processing status (S1) of each of a plurality of dental processing machines (100);
creating a status list (SL1) indicating the processing status (S1) of each of the acquired plurality of dental processing machines (100); and
displaying the crated status list (SL1) on a display device (201);
**characterized by**:
acquiring an image (M1) of a processing space (26) in which a workpiece (5) is processed in one dental processing machine (100) selected from the plurality of dental processing machines (100) by a user, the image (M1) being captured by an imaging device (105); and
displaying the image (M1) on the display device (201).

## Patentansprüche

1. Statusanzeigesystem (1), mit:
einer Statusanzeigevorrichtung (200);
mehreren Dentalverarbeitungseinrichtungen (100);
einem Bedienendgerät (110), das kommunizierend mit den mehreren Dentalverarbeitungseinrichtungen (100) und der Statusanzeigevorrichtung (200) verbunden ist; und
einem Speicher (120), der mit der Statusanzeigevorrichtung (200) und dem Bedienendgerät (110) kommunizierend verbunden ist, wobei
die Statusanzeigevorrichtung (200) aufweist
eine Statusbeschaffungseinheit (213), die ausgebildet ist, einen Verarbeitungsstatus (S1) jeder der mehreren Dentalverarbeitungseinrichtungen (100) zu beschaffen;
eine Statuserzeugungssteuerung (215), die ausgebildet ist, eine Statusliste (SL1) zu erzeugen, die den Verarbeitungsstatus (S1) jeder der mehreren Dentalverarbeitungseinrichtungen (100), der von der Statusbeschaffungseinheit (213) beschafft wird, anzugeben; und
eine Anzeigeverarbeitungssteuerung (251), die ausgebildet ist, die von der Statuserzeugungssteuerung (215) erzeugte Statusliste (SL1) anzuzeigen;
**dadurch gekennzeichnet, dass**
eine bildgebende Einrichtung (105) vorgesehen und ausgebildet ist, ein Bild (M1) eines Verarbeitungsraums (26) jeder der mehreren Dentalverarbeitungseinrichtungen (100) zu erfassen; und
die Statusanzeigevorrichtung (200) aufweist
eine Bildbeschaffungseinheit (225) die ausgebildet ist, das Bild (M1) des Verarbeitungsraums (26) zu beschaffen, in welchem ein Werkstück (5) in einer Dentalverarbeitungseinrichtung (100) verarbeitet wird, die aus den mehreren Dentalverarbeitungseinrichtungen (100) von einem Benutzer ausgewählt wird, wobei das Bild (M1) von der bildgebenden Einrichtung (105) erfasst wird; und
eine Bildbeschaffungsbefehlssteuerung (223), die ausgebildet ist, das Bedienendgerät (110) anzuweisen, das Bild (M1) der einen Dentalverarbeitungseinrichtung (100), die aus den mehreren Dentalverarbeitungseinrichtungen (100) von dem Benutzer ausgewählt wird, zu beschaffen;
wobei die Anzeigeverarbeitungssteuerung (251) ausgebildet ist, das von der Bildbeschaffungseinheit (225) beschaffte Bild (M1) auf der Anzeigevorrichtung (201) anzuzeigen;
wobei das Bedienendgerät (110) kommunizierend mit der bildgebenden Einrichtung (105) verbunden ist und aufweist
eine Endgerätbildbeschaffungseinheit (116), die ausgebildet ist, das Bild (M1) zu beschaffen, für das die Bildbeschaffungsbefehlssteuerung (223) die Anweisung gibt, es von der bildgebenden Einrichtung (105) zu beschaffen, und
einen Endgerätsender (119), der ausgebildet ist, das von der Endgerätbildbeschaffungseinheit (116) beschaffte Bild (M1) an den Speicher (120) zu senden, und
wobei die Bildbeschaffungseinheit (225) ausgebildet ist, das Bild (M1) aus dem Speicher (120) zu beschaffen.

2. Statusanzeigesystem (1) nach Anspruch 1,
wobei der Verarbeitungsstatus (S1) einen Zustand "in Betrieb" (S11) und/oder einen Zustand "nicht in Betrieb" (S12) und/oder einen Fehlerzustand (S13) beinhaltet.

3. Statusanzeigesystem (1) nach Anspruch 1 oder 2, wobei die Statusanzeigevorrichtung (200) ferner aufweist:
eine Listenbeschaffungseinheit (235), die ausgebildet ist, eine Verarbeitungsprogrammliste (PL1) von Verarbeitungsprogrammen (PG1) zu beschaffen, die von der einen Dentalverarbeitungseinrichtung (100), die von den mehreren Dentalverarbeitungseinrichtungen (100) durch den Benutzer ausgewählt ist, ausgeführt werden,
wobei die Anzeigeverarbeitungssteuerung (251) die von der Listenbeschaffungseinheit (235) beschaffte Bearbeitungsprogrammliste (PL1) anzeigt.

4. Statusanzeigesystem (1) nach Anspruch 3,
wobei die Anzeigeverarbeitungssteuerung (251) in Verbindung mit der Verarbeitungsprogrammliste (PL1) Information (103) darüber anzeigt, ob die Ausführung der Verarbeitungsprogramme (PG1) der Verarbeitungsprogrammliste (PL1) beendet ist.

5. Statusanzeigesystem (1) nach einem der Ansprüche 1 bis 4, wobei die Statusanzeigevorrichtung (200) ferner aufweist:
eine Beschaffungseinheit für interne Information (245), die ausgebildet ist, interne Information (SR1), die für die eine aus den mehreren Dentalverarbeitungseinrichtungen (100) durch den Benutzer ausgewählte Dentalverarbeitungseinrichtung (100) festgelegt ist, zu beschaffen,
wobei die Anzeigeverarbeitungssteuerung (251) die interne Information (SR1), die von der Beschaffungseinheit für interne Information (245) beschafft wird, anzeigt,
wobei die Dentalverarbeitungseinrichtung (100) aufweist
eine Werkzeuggreifeinheit (32), die ausgebildet ist, ein Bearbeitungswerkzeug (8) zu ergreifen,
eine Spindel (31), die ausgebildet ist, die Werkzeuggreifeinheit (32) zu drehen, und einen Bewegungsmechanismus (33), der ausgebildet ist, die Spindel (31) zu bewegen, und
wobei die Dentalverarbeitungseinrichtung (100) ausgebildet ist, ein Werkstück (5) zu verarbeiten,
wobei eine Position eines im Voraus festgelegten Nullpunkts für die Spindel (31) festgelegt ist, und
wobei die interne Information (S1) enthält
eine Firmware-Version (SR11) einer Firmware, die in der Dentalverarbeitungseinrichtung (100) eingerichtet ist, und/oder
eine Betriebsinformation (SR12) der Dentalverarbeitungseinrichtung (100), und/oder
einen Korrekturwert (SR13), der zur Einstellung der Position des Nullpunkts der Spindel (31) verwendet wird, und/oder
die Art (SR14) des Verarbeitungswerkzeugs (8), und/oder
die Art (SR15) des Werkstücks (5), und/oder
eine Fehlerinformation (SR16) der Dentalverarbeitungseinrichtung (100).

6. Statusanzeigesystem (1) nach einem der Ansprüche 1 bis 5,
wobei in der Statusliste (SL1) zugewiesen sind: der Verarbeitungsstatus (S1), eine Gerätekennung (101), die der Dentalverarbeitungseinrichtung (100) zugeordnet ist, ein Name (102a) der Dentalverarbeitungseinrichtung (100), ein Anlagenmodellname (102b) der Dentalverarbeitungseinrichtung (100) und eine Anlagennummer (102c) der Dentalverarbeitungseinrichtung (100).

7. Statusanzeigesystem (1) nach einem der Ansprüche 1 bis 6, das ferner aufweist:
einen Bedienblock (202), der von dem Benutzer bedient wird,
wobei die Anzeigeverarbeitungssteuerung (251) zumindest die Statusliste (SL1), die von der Statuserzeugungssteuerung (215) erzeugt wird, und das Bild (M1), das von der Bildbeschaffungseinheit (225) beschafft wird, auf der Anzeigeeinrichtung (201) anzeigt.

8. Statusanzeigesystem (1) nach Anspruch 7,
wobei die auf der Anzeigeeinrichtung (201) angezeigte Statusliste (SL1) derart ausgebildet ist, dass die eine Dentalverarbeitungseinrichtung (100) über den Bedienblock (202) aus den mehreren Dentalverarbeitungseinrichtungen (100), die in der Statusliste (SL1) angegeben sind, auswählbar ist, und
die Bildbeschaffungseinheit (225) das Bild (M1) für die eine Dentalverarbeitungseinrichtung (100), die von dem Benutzer über den Bedienblock (202) aus der in der Statusliste (SL1) angegebenen mehreren Dentalverarbeitungseinrichtungen (100) ausgewählt ist, beschafft.

9. Statusanzeigesystem (1) nach Anspruch 7 oder 8,
wobei die Anzeigeverarbeitungssteuerung (251) zumindest die von der Statuserzeugungssteuerung (215) erzeugte Statusliste (SL1) und das von der Bildbeschaffungseinheit (225) beschaffte Bild (M1) auf dem gleichen Bildschirm anzeigt.

10. Statusanzeigesystem (1) nach einem der Ansprüche 7 bis 9,
wobei ein Statusaktualisierungsknopf (BT1), der zum Aktualisieren der auf der Anzeigeeinrichtung (201) angezeigten Statusliste (SL1) verwendet wird, und ein Bildaktualisierungsknopf (BT2), der zum Aktualisieren des auf der Anzeigeeinrichtung (201) angezeigten Bilds (M1) verwendet wird, auf der Anzeigeeinrichtung (201) angezeigt werden,
wobei, wenn der Statusaktualisierungsknopf (BT1) mittels des Bedienblocks (202) gedrückt wird, die Statusbeschaffungseinheit (213) Information bezüglich des Verarbeitungsstatus (S1) für jede der mehreren Dentalverarbeitungseinrichtungen (100) beschafft, und wobei, wenn der Bildaktualisierungsknopf (BT2) mittels des Bedienblocks (202) gedrückt wird, die Bildbeschaffungseinheit (225) das Bild (M1) der einen von dem Benutzer ausgewählten Dentalverarbeitungseinrichtung (100) beschafft.

11. Verfahren zum Anzeigen eines Status einer Dentalverarbeitungseinrichtung unter Anwendung eines Statusanzeigesystems nach einem der vorhergehenden Ansprüche, mit den Schritten:
Beschaffen eines Verarbeitungsstatus (S1) für jede von mehreren Dentalverarbeitungseinrichtungen (100);
Erzeugen einer Statusliste (SL1), die den beschafften Verarbeitungsstatus (S1) jeder der mehreren Dentalverarbeitungseinrichtungen (100) angibt; und
Anzeigen der erzeugten Statusliste (SL1) auf einer Anzeigeeinrichtung (201);
**gekennzeichnet durch:**
Beschaffen eines Bildes (M1) eines Verarbeitungsraums (26), in welchem ein Werkstück (5) in einer Dentalverarbeitungseinrichtung (100), die durch einen Benutzer aus den mehreren Dentalverarbeitungseinrichtungen (100) ausgewählt wird, verarbeitet wird, wobei das Bild (M1) durch eine bildgebende Einrichtung (105) erfasst wird; und
Anzeigen des Bildes (M1) auf der Anzeigeeinrichtung (201).

## Revendications

1. Système d'affichage d'état (1) comprenant :
un dispositif d'affichage d'état (200) ;
une pluralité de machines de traitement dentaire (100) ;
un terminal d'opération (110) relié de manière à pouvoir communiquer à la pluralité des machines de traitement dentaire (100), et au dispositif d'affichage d'état (200) ; et
un stockage (120) relié de manière à pouvoir communiquer au dispositif d'affichage d'état (200) et au terminal d'opération (110),
le dispositif d'affichage d'état (200) comprenant
un dispositif d'acquisition d'état (213) conçu pour acquérir un état de traitement (S1) de chacune de la pluralité des machines de traitement dentaire (100) ;
un dispositif de commande de création d'état (215) conçu pour créer une liste d'états (SL1) indiquant l'état de traitement (S1) de chacune de la pluralité des machines de traitement dentaire (100) acquis par le dispositif d'acquisition d'état (213) ; et
un dispositif de commande de traitement d'affichage (251) conçu pour afficher la liste d'états (SL1) créée par le dispositif de commande de création d'état (215) ;
**caractérisé par** :
un dispositif d'imagerie (105) conçu pour capturer une image (M1) d'un espace de traitement (26) de chacune de la pluralité des machines de traitement dentaire (100) ; et en ce que
le dispositif d'affichage d'état (200) comprend
un dispositif d'acquisition d'image (225) conçu pour acquérir l'image (M1) de l'espace de traitement (26) dans lequel une pièce à travailler (5) est traitée dans une machine de traitement dentaire (100) sélectionnée parmi la pluralité des machines de traitement dentaire (100) par un utilisateur, l'image (M1) étant capturée par le dispositif d'imagerie (105) ; et
un dispositif de commande d'instruction d'acquisition d'image (223) conçu pour instruire le terminal d'opération (110) d'acquérir l'image (M1) de la machine de traitement dentaire (100) sélectionnée parmi la pluralité des machines de traitement dentaire (100) par l'utilisateur ;
le dispositif de commande de traitement d'affichage (251) étant conçu pour afficher l'image (M1) acquise par le dispositif d'acquisition d'image (225) sur un dispositif d'affichage (201) ;
le terminal d'opération (110) étant relié de manière à pouvoir communiquer au dispositif d'imagerie (105), et comprenant
un dispositif d'acquisition d'image terminal (116) conçu pour acquérir l'image (M1) instruite par le dispositif de commande d'instruction d'acquisition d'image (223) à acquérir du dispositif d'imagerie (105), et
un transmetteur terminal (119) conçu pour transmettre l'image (M1) acquise par le dispositif d'acquisition d'image terminal (116) au stockage (120), et
le dispositif d'acquisition d'image (225) étant conçu pour acquérir l'image (M1) à partir du stockage (120).

2. Système d'affichage d'état (1) selon la revendication 1,
l'état de traitement (S1) comprenant au moins un état de fonctionnement (S11), un état de non-fonctionnement (S12), et un état d'erreur (S13).

3. Système d'affichage d'état (1) selon la revendication 1 ou 2, le dispositif d'affichage d'état (200) comprenant en outre :
un dispositif d'acquisition de liste (235) conçu pour acquérir une liste des programmes de traitement (PL1) des programmes de traitement (PG1) qui sont exécutés par la une machine de traitement dentaire (100) sélectionnée parmi la pluralité des machines de traitement dentaire (100) par l'utilisateur,
le dispositif de commande de traitement d'affichage (251) affichant la liste des programmes de traitement (PL1) acquise par le dispositif d'acquisition de liste (235).

4. Système d'affichage d'état (1) selon la revendication 3,
le dispositif de commande de traitement d'affichage (251) affichant, avec la liste des programmes de traitement (PL1), des informations (103) sur le fait que l'exécution des programmes de traitement (PG1) de la liste des programmes de traitement (PL1) est terminée.

5. Système d'affichage d'état (1) selon l'une quelconque des revendications 1 à 4, le dispositif d'affichage d'état (200) comprenant en outre :
un dispositif d'acquisition d'informations internes (245) conçu pour acquérir des informations internes (SR1) définies pour la une machine de traitement dentaire (100) sélectionnée parmi la pluralité des machines de traitement dentaire (100) par l'utilisateur,
le dispositif de commande de traitement d'affichage (251) affichant les informations internes (SR1) acquises par le dispositif d'acquisition d'informations internes (245),
la machine de traitement dentaire (100) comprenant
un dispositif de préhension d'outil (32) conçu pour effectuer la préhension d'un outil de traitement (8),
une broche (31) conçue pour faire tourner le dispositif de préhension d'outil (32), et
un mécanisme de mouvement (33) conçu pour déplacer la broche (31), et
la machine de traitement dentaire (100) étant conçue pour traiter une pièce à travailler (5),
une position d'une origine déterminée à l'avance étant définie pour la broche (31), et
les informations internes (SR1) comprenant au moins l'un · e
d'une version de micrologiciel (SR11) d'un micrologiciel incorporé dans la machine de traitement dentaire (100),
d'informations de fonctionnement (SR12) de la machine de traitement dentaire (100),
d'une valeur de correction (SR13) utilisée pour ajuster la position de l'origine de la broche (31),
d'un type (SR14) d'outil de traitement (8),
d'un type (SR15) de pièce à travailler (5), et
d'informations d'erreur (SR16) de la machine de traitement dentaire (100).

6. Système d'affichage d'état (1) selon l'une quelconque des revendications 1 à 5,
dans la liste d'états (SL1), l'état de traitement (S1), un ID (101) du dispositif donné à la machine de traitement dentaire (100), un nom (102a) de la machine de traitement dentaire (100), un nom de modèle de machine (102b) de la machine de traitement dentaire (100), et un numéro de machine (102c) de la machine de traitement dentaire (100) étant associés.

7. Système d'affichage d'état (1) selon l'une quelconque des revendications 1 à 6, comprenant en outre :
une section de fonctionnement (202) qui est opérée par l'utilisateur,
le dispositif de commande de traitement d'affichage (251) affichant au moins la liste d'états (SL1) créée par le dispositif de commande de création d'état (215) et l'image (M1) acquise par le dispositif d'acquisition d'image (225) sur le dispositif d'affichage (201).

8. Système d'affichage d'état (1) selon la revendication 7,
la liste d'états (SL1) affichée sur le dispositif d'affichage (201) étant conçue de sorte que la une machine de traitement dentaire (100) peut être sélectionnée par l'intermédiaire de la section de fonctionnement (202) à partir de la pluralité des machines de traitement dentaire (100) indiquées dans la liste d'états (SL1), et
le dispositif d'acquisition d'image (225) acquérant l'image (M1) pour la une machine de traitement dentaire (100) sélectionnée parmi la pluralité des machines de traitement dentaire (100) indiquées dans la liste d'états (SL1) par l'utilisateur par l'intermédiaire de la section de fonctionnement (202).

9. Système d'affichage d'état (1) selon la revendication 7 ou 8,
le dispositif de commande de traitement d'affichage (251) affichant au moins la liste d'états (SL1) créée par le dispositif de commande de création d'état (215) et l'image (M1) acquise par le dispositif d'acquisition d'image (225) sur un même écran.

10. Système d'affichage d'état (1) selon l'une quelconque des revendications 7 à 9,
un bouton de mise à jour d'état (BT1) qui est utilisé pour mettre à jour la liste d'états (SL1) affichée sur le dispositif d'affichage (201) et un bouton de mise à jour d'image (BT2) qui est utilisé pour mettre à jour l'image (M1) affichée sur le dispositif d'affichage (201) étant affichés sur le dispositif d'affichage (201),
lorsque le bouton de mise à jour d'état (BT1) est pressé par l'intermédiaire de la section de fonctionnement (202), le dispositif d'acquisition d'état (213) acquiert les informations de l'état de traitement (S1) pour chacune de la pluralité des machines de traitement dentaire (100), et
lorsque le bouton de mise à jour d'image (BT2) est pressé par l'intermédiaire de la section de fonctionnement (202), le dispositif d'acquisition d'image (225) acquiert l'image (M1) de la une machine de traitement dentaire (100) sélectionnée par l'utilisateur.

11. Procédé d'affichage d'un état d'une machine de traitement dentaire utilisant le système d'affichage d'état selon l'une quelconque des revendications précédentes, comprenant les étapes de :
acquisition d'un état de traitement (S1) pour chacune d'une pluralité des machines de traitement dentaire (100) ;
création d'une liste d'états (SL1) indiquant l'état de traitement (S1) de chacune de la pluralité acquise des machines de traitement dentaire (100) ; et
affichage de la liste d'états (SL1) créée sur un dispositif d'affichage (201) ;
**caractérisé par** :
l'acquisition d'une image (M1) d'un espace de traitement (26) dans lequel une pièce à travailler (5) est traitée dans une machine de traitement dentaire (100) sélectionnée parmi la pluralité des machines de traitement dentaire (100) par un utilisateur, l'image (M1) étant capturée par un dispositif d'imagerie (105) ; et
l'affichage de l'image (M1) sur le dispositif d'affichage (201).
